(19) Europäisches Patentamt
European Patent Office
Office européen des brevets

(11) **EP 3 107 298 A1**

(12) **EUROPEAN PATENT APPLICATION**
published in accordance with Art. 153(4) EPC

(43) Date of publication:
**21.12.2016 Bulletin 2016/51**

(51) Int Cl.:
**H04N 19/70** (2014.01)  **H04N 19/146** (2014.01)
**H04N 19/117** (2014.01)

(21) Application number: **15761428.0**

(22) Date of filing: **16.03.2015**

(86) International application number:
**PCT/KR2015/002528**

(87) International publication number:
**WO 2015/137785 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.03.2014 US 201461953196 P**

(71) Applicant: **Samsung Electronics Co., Ltd.**
**Gyeonggi-do 16677 (KR)**

(72) Inventors:
• **ALSHINA, Elena**
**Suwon-si**
**Gyeonggi-do 443-809 (KR)**
• **ALSHIN, Alexander**
**Suwon-si**
**Gyeonggi-do 443-809 (KR)**

(74) Representative: **Appleyard Lees IP LLP**
**15 Clare Road**
**Halifax HX1 2HY (GB)**

(54) **IMAGE ENCODING METHOD FOR SAMPLE VALUE COMPENSATION AND APPARATUS THEREFOR, AND IMAGE DECODING METHOD FOR SAMPLE VALUE COMPENSATION AND APPARATUS THEREFOR**

(57)     Provided are a video encoding method and apparatus and a video decoding method and apparatus for generating a reconstructed image having a minimized error between an original image and the reconstructed image. The video decoding method includes: parsing, from a bitstream, a scale parameter for scaling an offset of a current block; scaling an offset absolute value of the current block by using the scale parameter; determining an offset of the current block by using the scaled offset absolute value; and compensating for a sample value of a reconstructed pixel of the current block by using the offset of the current block.

FIG. 3

EXTRACTOR → OFFSET DETERMINER → PIXEL COMPENSATOR

**Description**

TECHNICAL FIELD

The present disclosure relates to video encoding and video decoding.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a block having a predetermined size.

Image data of the spatial domain is transformed into coefficients of the frequency domain via frequency transformation. According to a video codec, an image is split into blocks having a predetermined size, discrete cosine transformation (DCT) is performed on each block, and frequency coefficients are encoded in block units, for rapid calculation of frequency transformation. Compared with image data of the spatial domain, coefficients of the frequency domain are easily compressed. In particular, since an image pixel value of the spatial domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

DETAILED DESCRIPTION OF THE INVENTION

TECHNICAL PROBLEM

The present disclosure proposes a video encoding method and apparatus and a video decoding method and apparatus for generating a reconstructed image having a minimized error between an original image and the reconstructed image at a high bit depth and a high bit rate.

TECHNICAL SOLUTION

A video decoding method according to an embodiment of the present disclosure includes: parsing, from a bitstream, a scale parameter for scaling an offset of a current block; scaling an offset absolute value of the current block by using the scale parameter; determining an offset of the current block by using the scaled offset absolute value; and compensating for a sample value of a reconstructed pixel of the current block by using the offset of the current block.

The scale parameter may be based on at least one of a bit depth and a quantization parameter.

The parsing from the bitstream may include parsing the scale parameter from a picture parameter set (PPS) of the bitstream.

The parsing from the bitstream may include parsing the scale parameter from a sequence parameter set (SPS) of the bitstream.

The parsing from the bitstream may include parsing the scale parameter from a slice segment header of the bitstream.

The video decoding method may further include: parsing a flag, which indicates that the scale parameter is present in the slice segment header, from a sequence parameter set of the bitstream; and parsing the scale parameter from the slice segment header when the flag is 1.

The scale parameter may include at least one of a parameter related to a luma component and a parameter related to a chroma component.

The scale parameter may include at least one of a parameter related to an edge offset (EO) and a parameter related to a band offset (BO).

The scale parameter may have a range of 0 to Max(bitDepth-10, 0), wherein bitDepth denotes a bit depth.

A video decoding apparatus according to an embodiment of the present disclosure includes: an extractor configured to parse, from a bitstream, a scale parameter for scaling an offset of a current block; an offset determiner configured to scale an offset absolute value of the current block by using the scale parameter, and determine an offset of the current block by using the scaled offset absolute value; and a pixel compensator configured to compensate for a sample value of a reconstructed pixel of the current block by using the offset of the current block.

A program for performing the video decoding method according to an embodiment of the present disclosure may be recorded on a non-transitory computer-readable recording medium.

A video encoding method according to an embodiment of the present disclosure includes: encoding an image based on blocks having a tree structure; determining a scale parameter for scaling an offset of a current block; encoding the scale parameter; and transmitting a bitstream including the encoded scale parameter.

The determining of the scale parameter may include determining the scale parameter based on at least one a bit depth and a quantization parameter.

The determining of the scale parameter may include determining the scale parameter in a range of 0 to Max(bit-Depth-10, 0), wherein bitDepth denotes a bit depth.

A video encoding apparatus according to an embodiment of the present disclosure includes: an encoder configured to encode an image based on blocks having a tree structure; a parameter determiner configured to determine a scale parameter for scaling an offset of a current block; and a transmitter configured to encode the scale parameter and transmit a bitstream including the encoded scale parameter.

DESCRIPTION OF THE DRAWINGS

FIG. 1 is a block diagram of a video encoding apparatus 10 according to an embodiment of the present disclosure.
FIG. 2 is a flowchart of a video encoding method according to an embodiment of the present disclosure.
FIG. 3 is a block diagram of a video decoding apparatus 30 according to an embodiment of the present disclosure.
FIG. 4 is a flowchart of a video decoding method according to an embodiment of the present disclosure.
FIG. 5 is a block diagram of a video decoding apparatus 50 according to another embodiment of the present disclosure.
FIG. 6 is a table showing edge classes of edge types, according to an embodiment.
FIGS. 7A and 7B are a table and a graph showing categories of edge types, according to an embodiment.
FIG. 8 is a block diagram of a video encoding apparatus 100 based on coding units according to a tree structure, according to an embodiment of the present disclosure.
FIG. 9 is a block diagram of a video decoding apparatus 200 based on coding units having a tree structure, according to an embodiment of the present disclosure.
FIG. 10 is a diagram for describing a concept of coding units according to an embodiment of the present disclosure.
FIG. 11 is a block diagram of an image encoder 400 based on coding units, according to an embodiment of the present disclosure.
FIG. 12 is a block diagram of an image decoder 500 based on coding units, according to an embodiment of the present disclosure.
FIG. 13 is a diagram illustrating deeper coding units according to depths, and partitions, according to an embodiment of the present disclosure.
FIG. 14 is a diagram for describing a relationship between a coding unit and transformation units, according to an embodiment of the present disclosure.
FIG. 15 is a diagram for describing a plurality of pieces of encoding information according to depths, according to an embodiment of the present disclosure.
FIG. 16 is a diagram of deeper coding units according to depths, according to an embodiment of the present disclosure.
FIG. 17 is a diagram for describing a relationship between coding units, prediction units, and transformation units, according to an embodiment of the present disclosure.
FIG. 18 is a diagram for describing a relationship between coding units, prediction units, and transformation units, according to an embodiment of the present disclosure.
FIG. 19 is a diagram for describing a relationship between coding units, prediction units, and transformation units, according to an embodiment of the present disclosure.
FIG. 20 is a diagram for describing a relationship between a coding unit, a prediction unit, and a transformation unit, according to encoding mode information of Table 1.

MODE OF THE INVENTION

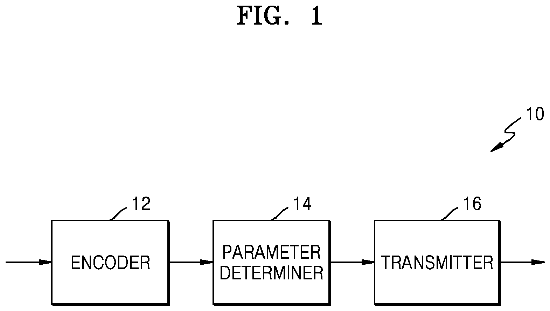

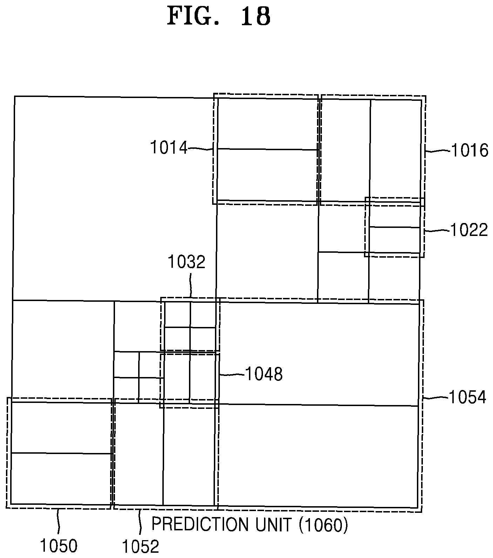

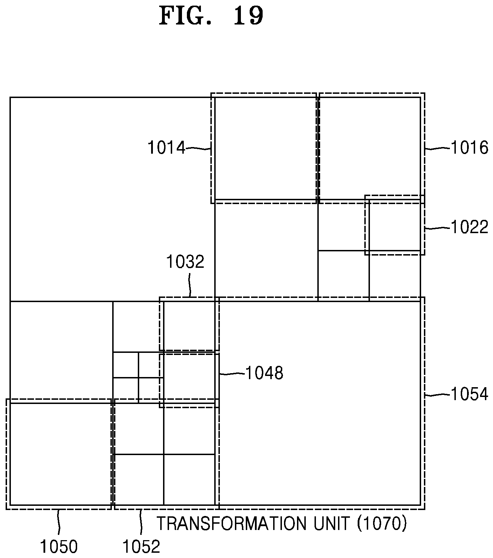

A video encoding technique and a video decoding technique for scaling an offset of a current block by using a scale parameter based on at least one of a bit depth and a quantization parameter, according to an embodiment of the present disclosure, will be described below with reference to FIGS. 1 through 7. Also, an embodiment for scaling an offset of a current block in a video encoding technique and a video decoding technique based on coding units having a tree structure, according to an embodiment of the present disclosure, will be disclosed with reference to FIGS 1 through 20. Hereinafter, an "image" may represent a still image or a moving image of a video, or a video itself.

First, a video encoding technique and a video decoding technique for scaling an offset of a current block by using a scale parameter based on at least one of a bit depth and a quantization parameter, according to an embodiment of the present disclosure, will be described below with reference to FIGS. 1 through 7.

FIG. 1 is a block diagram of a video encoding apparatus 10 according to an embodiment of the present disclosure.

The video encoding apparatus 10 according to an embodiment may include an encoder 12, a parameter determiner 14, and a transmitter 16.

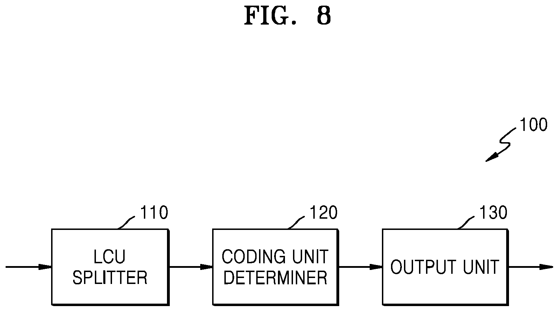

The video encoding apparatus 10 according to an embodiment receives images of a video, splits each of the images into blocks, and performs encoding on each of the blocks. A type of a block may be a square, a rectangle, or any geometric shape. The block is not limited to a data unit having a constant size. According to an embodiment, the block may be coding units having a tree structure. For example, coding units having a tree structure may include a largest coding unit (LCU) and a coding unit (CU). Video encoding and decoding methods based on coding units having a tree structure will be described below with reference to FIGS. 8 through 20.

The video encoding apparatus 10 according to an embodiment may receive images of a video, split each of the images into largest coding units, perform prediction, transformation, and entropy encoding on samples with respect to each largest coding unit, and output the resultant data in a type of a bitstream. The samples of the largest coding unit may be sample value data of pixels included in the largest coding unit.

The encoder 12 according to an embodiment may encode an image based on blocks having a tree structure. Also, the encoder 12 may individually perform encoding on each largest coding unit of the image included in the blocks having the tree structure. The encoder 12 according to an embodiment may encode a current largest coding unit based on coding units having a tree structure split from the current largest coding unit.

In order to encode the current largest coding unit, the encoder 12 according to an embodiment may encode samples by performing intra prediction, inter prediction, transformation, and quantization on each coding unit having a tree structure included in the current coding unit.

The encoder 12 according to an embodiment may reconstruct the samples included in the current block by decoding the encoded samples through inverse quantization, inverse transformation, and inter prediction or intra prediction on each block having the tree structure again.

The video encoding apparatus 10 according to an embodiment may determine an offset value indicating a difference value between an original pixel and a reconstructed pixel so as to minimize an error between the original pixel before the current block is encoded and the reconstructed pixel after the current block is decoded again. Also, the offset value may be expressed by using at least one of an offset absolute value and a scale parameter for scaling the offset absolute value. For example, the video encoding apparatus 10 may determine the offset value by performing a shift operation on the offset absolute value based on the scale parameter. When the video encoding apparatus 10 expresses the offset value by using the offset absolute value and the scale parameter, the number of bits used may be reduced, thereby improving efficiency in the amount of information per bit of the bitstream.

The offset absolute value is information that is related to a magnitude of an offset and may be included in the bitstream. Also, the offset absolute value has a positive number and may be scaled by the scale parameter. The scale may mean a shift operation.

The parameter determiner 14 according to an embodiment may determine an offset parameter with respect to each block. The offset parameter may include an offset value, an offset type, and an offset class. For example, the parameter determiner 14 may determine the offset value with respect to each largest coding unit. The parameter determiner 14 may also determine the offset type and the offset class with respect to each largest coding unit.

As described above, the offset value may be expressed by using the offset absolute value and the scale parameter for scaling the offset absolute value. For example, the offset value may be expressed by scaling the offset absolute value by the scale parameter. The scale parameter may be 0.

The video encoding apparatus 10 may determine whether to transmit the scale parameter to the video decoding apparatus 30 through the bitstream. For example, when the video encoding apparatus 10 determines the offset value by scaling the offset absolute value by using the scale parameter, the video encoding apparatus 10 may set an adaptive offset enable flag. That is, when a value of the adaptive offset enable flag is 1, the offset value may be determined by scaling the offset absolute value as much as the scale parameter. The video encoding apparatus 10 may transmit the offset absolute value, the scale parameter, and the adaptive offset enable flag to the video decoding apparatus 30 through the bitstream. The video decoding apparatus 30 may parse the adaptive offset enable flag and determine whether to parse the scale parameter. For example, when the adaptive offset enable flag is 1, the video decoding apparatus 30 may parse the scale parameter. Also, the video decoding apparatus 30 may determine the offset value by scaling the offset absolute value as much as the scale parameter.

According to an embodiment of the present disclosure, when the video encoding apparatus 10 does not use the scale parameter, the video encoding apparatus 10 may set the adaptive offset enable flag to be 0. The video encoding apparatus 10 may transmit the offset absolute value and the adaptive offset enable flag through the bitstream. The video decoding apparatus 30 may parse the adaptive offset enable flag and determine whether to parse the scale parameter. When the adaptive offset enable flag is 0, the video decoding apparatus 30 may not parse the scale parameter. The video decoding apparatus 30 may determine the offset value by using the offset absolute value. For example, the video decoding apparatus 30 may determine the offset value by using the offset absolute value and the bit depth.

According to another embodiment of the present disclosure, when the video encoding apparatus 10 does not use the scale parameter, the video encoding apparatus 10 may set the adaptive offset enable flag to be 0. Also, the video encoding apparatus 10 may transmit the adaptive offset enable flag through the bitstream. The video decoding apparatus 30 may parse the adaptive offset enable flag and determine not to compensate for the sample value of the reconstructed pixel of the current block.

The parameter determiner 14 may determine at least one of the offset absolute value and the scale parameter for scaling the offset of the current block. Also, the offset value may have a sign. In this case, the offset value may be expressed by using at least one of an offset sign, an offset absolute value, and a scale parameter for scaling the offset absolute value.

The parameter determiner 14 according to an embodiment may determine an offset type according to a method of classifying sample values of a current block. The offset type according to an embodiment may be determined as an edge type or a band type. It may be determined whether it is appropriate to classify pixels of the current block according to the edge type, or to classify pixels according to the band type, depending on the method of classifying the sample values of the current block.

If the offset type according to an embodiment is an edge type, offsets between reconstructed pixels and original pixels may be determined according to an edge direction and an edge shape formed with adjacent pixels by the reconstructed pixels of the current block.

If the offset type according to an embodiment is a band type, offsets of reconstructed pixels belonging to some bands may be determined among a plurality of bands dividing a range of sample values of the reconstructed pixels of the current block. In some cases, the bands may divide the range of the sample values at equal intervals or at unequal intervals. The range of the sample values may be determined based on the bit depth. The range of the sample values will be described below.

Therefore, the parameter determiner 14 according to an embodiment may determine the offset type of the current block, which indicates the edge type or the band type, based on spatial characteristics of the sample values of the current block.

The parameter determiner 14 according to an embodiment may determine an offset class with respect to each reconstructed pixel according to the offset type of the current block. The offset class according to an embodiment may be determined as an edge class or a band class.

In the case of the edge type, the edge class according to an embodiment may indicate an edge direction formed with adjacent pixels by the reconstructed pixels. The edge class according to an embodiment may indicate an edge direction of 0°, 90°, 45°, or 135°.

When the offset type is the edge type, the parameter determiner 14 according to an embodiment may determine the offset class with respect to each reconstructed pixel of the current block.

In the case of the band type, when the range of the sample values of the current block is divided into a predetermined number of continuous periods, each period of the sample values is referred to as a band, and the band class according to an embodiment may indicate a band position indicating a band to which the sample values of the reconstructed pixels belong.

For example, when the sample values according to an embodiment are 8-bit pixels, the range of the pixel ranges may be 0 to 255 and the sample values may be divided into a total of 32 bands. In this case, from among the 32 bands, a predetermined number of bands to which the sample values of the reconstructed pixels belong may be determined. The band class according to an embodiment may indicate start positions of the predetermined number of continuous bands, and the position of the most precedent band may be expressed by a band index of 1 to 31.

In the case of the edge type, the reconstructed pixels of the current block may be classified into a predetermined number of categories according to an edge shape formed with adjacent pixels. For example, the reconstructed pixels may be classified into four categories according to four edge shapes, i.e., a local valley of a concave edge, a curved corner of a concave edge, a curved corner of a convex edge, and a local peak of a convex edge. Each of the reconstructed pixels of the current block may be determined as belonging to one of the four categories according to which edge shape is formed.

In the case of the band type, the reconstructed pixels of the current block may be classified into a predetermined number of categories according to band positions to which sample values of the reconstructed pixels belong. For example, the reconstructed pixels may be classified into four categories according to band indices of four bands continuous from the start position of the band indicated by the band class. Each of the reconstructed pixels of the current block may be determined as belonging to one of the four categories according to which band of the four bands each of the reconstructed pixels belongs to.

The parameter determiner 14 according to an embodiment may determine a category with respect to each of the reconstructed pixels of the current block. The parameter determiner 14 according to an embodiment may determine offset values by using difference values between the reconstructed pixels and the original pixels with respect to the reconstructed pixels belonging to the same category in the current coding unit. An average of difference values between the reconstructed pixels and the original pixels, i.e., an average error of the reconstructed pixels may be determined as an offset value corresponding to the current category. The parameter determiner 14 according to an embodiment may determine an offset value of each category and determine offset values of all categories by using an offset value of the current block.

For example, when the offset type of the current block is the edge type and the reconstructed pixels are classified into four categories according to the edge shape, or when the offset type of the current block is the band type and the reconstructed pixels are classified into four categories according to indices of four continuous bands, the parameter determiner 14 according to an embodiment determines an average error between the reconstructed pixels belonging to each of the four categories and the original pixels. Thus, four offset values may be determined.

Each of the offset values according to an embodiment may be greater than or equal to a preset minimum value and may be less than or equal to a preset maximum value.

The transmitter 16 according to an embodiment may encode the offset type of the current block, the offset class, and the offset parameter including the offset value, which are determined by the parameter determiner 14. Also, the transmitter 16 may transmit a bitstream including the encoded offset parameter. The offset parameter of each block may include the offset type and the offset values of each block. As described above, the offset value may be expressed by using at least one of an offset absolute value and a scale parameter.

For example, the transmitter 16 may encode the scale parameter and transmit a bitstream including the encoded offset parameter. Since the transmitter 16 transmits the bitstream including the offset absolute value and the scale parameter, the video decoding apparatus 30 may receive the bitstream and parse the offset absolute value and the scale parameter from the bitstream. The video decoding apparatus 30 may determine the offset value by performing a shift operation on the offset absolute value based on the scale parameter. According to an embodiment of the present disclosure, since the scale parameter is included in the bitstream, the video encoding apparatus 10 and the video decoding apparatus 30 may provide an offset corresponding to an image having a high bit depth or a high bit rate.

The offset type may be an off type, an edge type, or a band type. If the offset type is an off type, it may indicate that an offset adjustment technique is not applied to the current block. In this case, the other offset parameters of the current block need not be encoded any more.

When the offset type is the edge type, the offset parameter may include offset values corresponding to each of edge categories. If the offset type is the band type, the offset parameter may include offset values corresponding to each of edge categories. That is, the transmitter 16 may encode the offset parameter with respect to each block.

The transmitter 16 according to an embodiment may transmit offset mergence information of the current block indicating whether to determine a first offset parameter by using a second offset parameter, based on identity of the first offset parameter of the current block and second offset parameters of an adjacent left or upper block.

When the offset parameter of at least one of blocks disposed on left and upper sides of the current block is identical to the offset parameter of the current block, the transmitter 16 according to an embodiment may encode only the offset mergence information except for the offset parameter of the current block. In this case, the offset mergence information indicating that the offset parameter of the left or upper block is used as the offset parameter of the current block may be transmitted.

When the offset parameters of the left and upper blocks are different from the offset parameter of the current block, the transmitter 16 according to an embodiment may encode the offset mergence information and the offset parameter of the current block. In this case, the offset mergence information indicating that the offset parameter of the left or upper block is not used as the offset parameter of the current block may be transmitted.

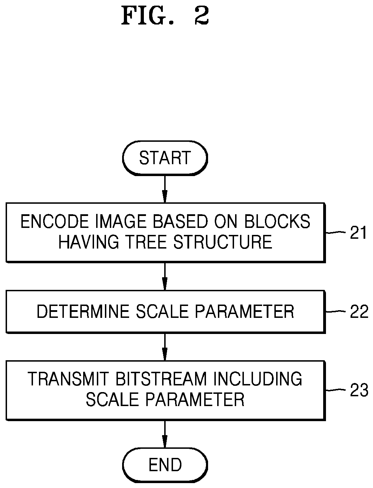

FIG. 2 is a flowchart of a video encoding method according to an embodiment of the present disclosure.

An embodiment for outputting the offset mergence information and the offset parameter will be described below with reference to a flowchart an offset adjusting method illustrated in FIG. 2. Descriptions already provided above in the video encoding apparatus 10 of FIG. 1 are omitted.

In operation 21, the encoder 12 may encode a video based on blocks having a tree structure. A current block from among the blocks may be encoded based on coding units having a tree structure.

In operation 22, the parameter determiner 14 may determine a first offset parameter of the current block. The first offset parameter may include an offset type indicating whether a method of classifying sample values of the current block is an edge type or a band type, an offset class indicating an edge direction according to the edge type or a band range according to the band type, and an offset value indicating a difference value between original pixels and reconstructed pixels included in the offset class. The offset value may be expressed by using at least one of an offset absolute value and a scale parameter for scaling the offset absolute value. In operation 22, the parameter determiner 14 may determine the scale parameter for scaling the offset of the current block.

Also, in operation 22, the parameter determiner 14 may determine the scale parameter based on at least one of a bit depth and a quantization parameter. The scale parameter may be determined by using Equation (1) below:

$$\text{Scale Parameter} = \text{Min}(\text{Max}(0,(\text{bitDepth}-10)+A+p*QP-5), \text{MaxSaoBitShift}) \dots (1)$$

In Equation (1), bitDepth denotes a bit depth. QP denotes a quantization parameter. Also, MaxSaoBitShift denotes a maximum value of a scale parameter. The video encoding apparatus 10 may determine MaxSaoBitShift based on the bit depth. Also, A and p denote predetermined constants. As A and p, appropriate values can be obtained by an experimental method. A and p may be changed according to an offset type or a color component. For example, if the offset type is an edge type, A may be 0.86 and p may be 0.15. Also, if the offset type is a band type, A may be 1.3 and p may be 0.19. A and p may be 0.

Also, the scale parameter may be determined within a predetermined range. The scale parameter may be less than a maximum scale parameter. Also, the maximum scale parameter may be determined based on the bit depth. For example, the scale parameter may be determined within a range of 0 to Max(bitDepth-10, 0). Max(bitDepth-10, 0) represents a maximum value in "bitDepth-10" and "0". In Equation (1), MaxSaoBitShift may be Max(bitDepth-10, 0).

In operation 23, the transmitter 16 may encode and transmit a first parameter. For example, the transmitter 16 may encode a scale parameter included in the first parameter. Also, the transmitter 16 may transmit a bitstream including the scale parameter. For example, the transmitter 16 may transmit the scale parameter through a picture parameter set of the bitstream.

In operation 23, the transmitter 16 may further transmit offset mergence information of the current block as the first offset parameter, based on whether the first offset parameter can be determined by using the second offset parameter of the left or upper block of the current block.

If the transmitter 16 according to an embodiment determines the first offset parameter by using the second offset parameter, the transmitter 16 may output only the offset mergence information and may not transmit the offset type, the offset class, and the offset values of the current block.

However, in operation 23, when the transmitter 16 does not determine the first offset parameter by using the second offset parameter, the transmitter 16 may transmit the first offset parameter so that the offset type, the offset value, and the offset class of the current block are included subsequently to the offset mergence information of the current block.

When outputting the offset type, the offset value, and the offset class of the first offset parameter, the transmitter 16 according to an embodiment may transmit the offset type of the current block, the offset values of each category, and the offset class in this order.

The video encoding apparatus 10 according to another embodiment may determine whether to adjust the offset with respect to each block in a current slice.

When the offset is adjusted in the current slice, the parameter determiner 14 may determine offset mergence information and an offset parameter with respect to each block. In this case, after outputting offset adjustment information indicating that the offset technique is applied to the current slice, the transmitter 16 may transmit the offset mergence information and the offset parameter determined with respect to each block.

If the offset is not adjusted in the current slice, the parameter determiner 14 need not determine the offsets of the blocks of the current slice and the transmitter 16 has only to transmit only the offset adjustment information indicating that the offset is not adjusted in the current slice.

In operation 23, the transmitter 16 may transmit the offset values corresponding to a predetermined number of categories.

For example, in operation 23, the transmitter 16 may transmit offset type information. Also, in operation 23, the transmitter 16 may transmit the offset absolute values corresponding to the categories.

In operation 23, when the transmitter 16 transmits the offset type information indicating the edge type, the transmitter 16 may transmit the edge class indicating a direction of 0°, 90°, 45°, or 135° according to edge directions of the reconstructed pixels included in the current block.

In operation 23, when the transmitter 16 transmits the offset type information indicating the band type, the transmitter 16 may determine whether the offset absolute value is 0. When the offset absolute value transmitted by the transmitter 16 is 0, the transmitter 16 may not transmit sign information of the offset value. Also, when the offset absolute value transmitted by the transmitter 16 is not 0, the transmitter 16 may transmit sign information of the offset value. Also, the transmitter 16 may transmit the band class indicating the band positions of the reconstructed pixels included in the current block.

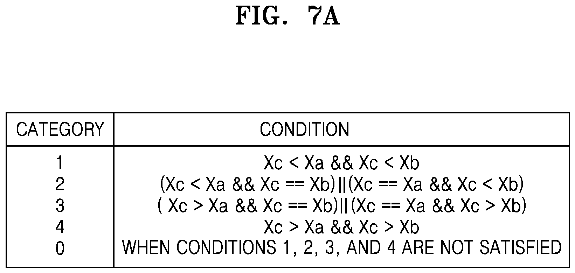

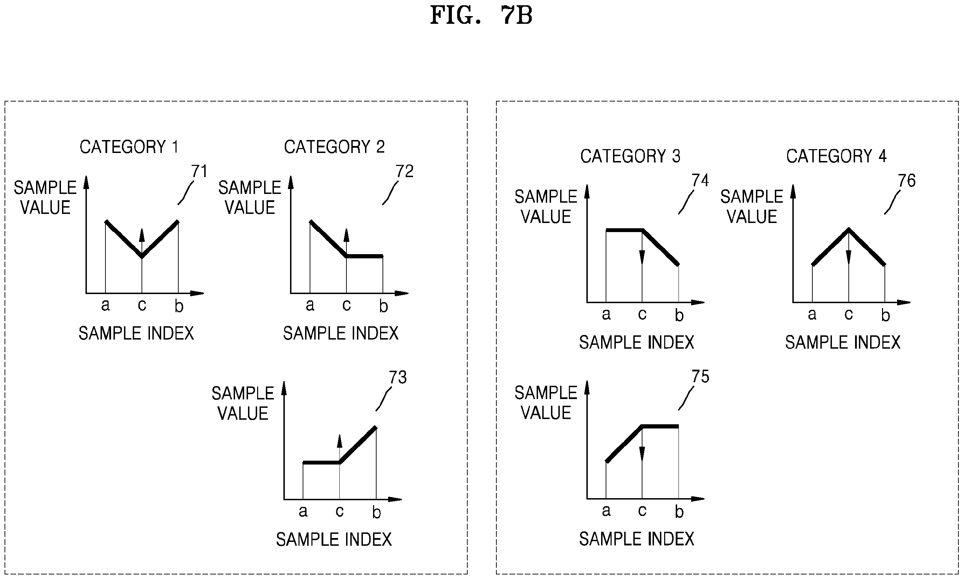

In operation 23, when the transmitter 16 transmits the offset type information indicating the edge type, the transmitter 16 need not transmit the sign information of the offset value because the sign of the offset value is estimated just by the category based on the edge shape. The estimation of the sign of the offset value will be described below with reference to FIGS. 7A and 7B.

In operation 23, the transmitter 16 may output common offset mergence information for offset adjustment of a luma component, a first chroma component, and a second chroma component of the current block.

In operation 23, the transmitter 16 may output a common offset type for an offset parameter of the first chroma component of the current block and the second chroma component of the current block. Also, the edge class or the band class can transmit a common offset type for a first chroma component and a second chroma component.

The video encoding apparatus 10 according to an embodiment may include a central processor (not shown) for collectively controlling the encoder 12, the parameter determiner 14, and the transmitter 16. Alternatively, the encoder 12, the parameter determiner 14, and the transmitter 16 may be driven by their individual processors (not shown) that cooperatively operate to control the video encoding apparatus 10. Alternatively, an external process (not shown) outside the video encoding apparatus 10 may control the encoder 12, the parameter determiner 14, and the transmitter 16.

The video encoding apparatus 10 may include one or more data storages (not shown) for storing input and output data of the encoder 12, the parameter determiner 14, and the transmitter 16. The video encoding apparatus 10 may include a memory controller (not shown) for managing data input and output to and from the data storage (not shown).

In order to output a video encoding result, the video encoding apparatus 10 according to an embodiment may operate in association with an internal or external video encoding processor and thus may perform the video encoding operation including transformation. The internal video encoding processor of the video encoding apparatus 10 may be an independent processor for performing a video encoding operation. Also, the video encoding apparatus 10, a central processing unit, or a graphic processing unit may include a video encoding processing module to perform a basic video encoding operation.

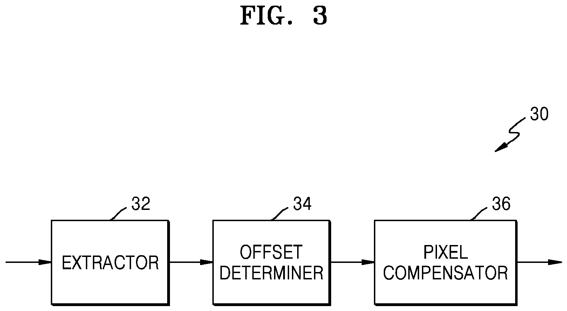

FIG. 3 is a block diagram of a video decoding apparatus 30 according to an embodiment of the present disclosure.

The video decoding apparatus 30 according to an embodiment may include an extractor 32, an offset determiner 34, and a pixel compensator 36.

The video decoding apparatus 30 according to an embodiment receives a bitstream including encoded data of a video. The video decoding apparatus 30 may parse video samples encoded from the received bitstream, generate reconstructed pixels by performing entropy decoding, inverse quantization, inverse transformation, prediction, and motion compensation on each image block, and finally generate a reconstructed image.

For example, the extractor 32 may parse, from the bitstream, a scale parameter for scaling an offset of a current block. Also, the extractor 32 may parse, from the bitstream, an offset absolute value of a current block. Also, the offset determiner 34 may scale the offset absolute value of the current block by using the scale parameter. The scale may mean a shift operation. The offset determiner 34 may determine the offset of the current block by using the scaled offset absolute value. Also, the pixel compensator 36 may compensate for sample values of reconstructed pixels of the current block by using the offset of the current block.

The video decoding apparatus 30 may receive a bitstream including the offset absolute value, the scale parameter, and the adaptive offset enable flag from the video encoding apparatus 10. For example, when the video decoding apparatus 30 may determine the offset value by using the offset absolute value and the scale parameter, based on the adaptive offset enable flag included in the bitstream. That is, the video decoding apparatus 30 may parse the adaptive offset enable flag and determine whether to parse the scale parameter. For example, when the adaptive offset enable flag is 1, the video decoding apparatus 30 may parse the scale parameter. Also, the video decoding apparatus 30 may determine the offset value by scaling the offset absolute value by the scale parameter.

According to an embodiment of the present disclosure, the video decoding apparatus 30 may parse the adaptive offset enable flag and determine whether to parse the scale parameter. When the received adaptive offset enable flag of the current block is 0, the video decoding apparatus 30 may not parse the scale parameter. The video decoding apparatus 30 may determine the offset value by using the offset absolute value. For example, the video decoding apparatus 30 may determine the offset value by using the offset absolute value and the bit depth.

According to another embodiment of the present disclosure, when the received adaptive offset enable flag of the current block is 0, the video decoding apparatus 30 may determine not to compensate for the sample values of the reconstructed pixels of the current block.

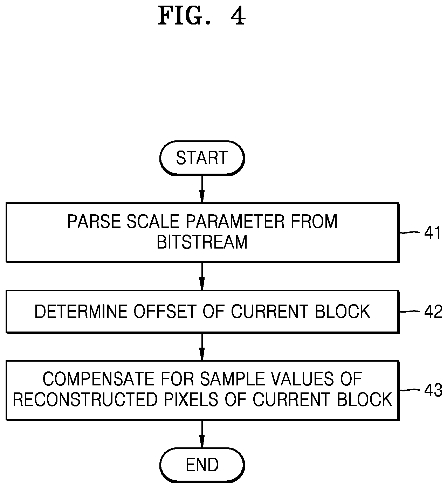

Hereinafter, a video decoding method performed by a video decoding apparatus will be described in more detail with reference to FIG. 4.

FIG. 4 is a flowchart of a video decoding method according to an embodiment of the present disclosure.

A method of reconstruct samples of a current block and adjusting an offset will be described below with reference to FIG. 4.

In operation 41, the extractor 32 may parse an offset parameter from a bitstream. For example, the extractor 32 may parse, from the bitstream, a scale parameter for scaling an offset of a current block. Also, the extractor 32 may parse, from the bitstream, information including at least one of offset type information of the current block, an offset absolute value, sign information of the offset value, a band class, and an edge class.

Also, in operation 41, the extractor 32 may parse offset mergence information of the current block from the received bitstream. The offset mergence information of the current block indicates whether to determine a first offset parameter of the current block by using a second offset parameter of a block disposed on a left or upper side of the current block.

Also, in operation 41, the extractor 32 may parse the scale parameter from a picture parameter set of the bitstream. Also, the extractor 32 may parse the scale parameter from a sequence parameter set (SPS) of the bitstream. Also, the extractor 32 may parse the scale parameter from a slice segment header of the bitstream.

Also, in operation 41, if the extractor 32 parses the scale parameter from the slice segment header of the bitstream, the extractor 32 may parse, from the sequence parameter set of the bitstream, a flag which indicates that the scale parameter is present in the slice segment header. Also, when the flag indicates that the scale parameter is present in the slice segment header (that is, when a value of the flag is 1), the extractor 32 may parse the scale parameter from the slice segment header.

Also, in operation 41, the scale parameter may include at least one of a parameter related to a luma component and a parameter related to a chroma component. In operation 42, the offset determiner 34 may scale an offset absolute value related to the luma component by using the parameter related to the luma component. The offset determiner 34 may determine the offset value of the luma component based on the scaled offset absolute value related to the luma component. Similarly, in operation 42, the offset determiner 34 may scale an offset absolute value related to the chroma component by using the parameter related to the chroma component. The offset determiner 34 may determine the offset value of the chroma component based on the scaled offset absolute value related to the chroma component.

Also, in operation 41, the scale parameter may include at least one of a parameter related to an edge offset (EO) and a parameter related to a band offset (BO). In operation 42, the offset determiner 34 may scale an offset absolute value related to the edge offset by using the parameter related to the edge offset. The offset determiner 34 may determine an edge offset value based on an absolute value related to the scaled edge offset. In operation 42, the offset determiner 34 may scale an offset absolute value related to the band offset by using the parameter related to the band offset. The offset determiner 34 may determine a band offset value based on an absolute value related to the scaled band offset.

In operation 42, the offset determiner 34 may reconstruct a first offset parameter including an offset type, an offset value, and an offset class of a current block, based on offset mergence information. The offset determiner 34 may reconstruct an offset value by using the offset absolute value and the scale parameter for scaling the offset absolute value. For example, the offset absolute value of the current block may be scaled by using the scale parameter, and the offset of the current block may be determined by using the scaled offset absolute value.

The scale parameter may be based on at least one of a bit depth and a quantization parameter. Since these have been described with Equation (1), detailed descriptions thereof will be omitted. Also, the scale parameter may have a range of 0 to Max(bitDepth-10, 0).

Hereinafter, the video decoding method will be described in more detail. The offset determiner 34 according to an embodiment may determine whether to reconstruct the offset type, the offset value, and the offset class of the current block by using the second offset parameter or whether to extract the offset type, the offset value, and the offset class from the bitstream, based on offset mergence information.

In operation 42, the offset determiner 34 may determine whether a method of classifying sample values of the current block is an edge type or a band type, based on the parsed offset type. Also, in operation 42, the offset determiner 34 may determine the offset absolute value of the current block from the parsed offset absolute value.

If the offset type is an off type, it may be determined not to apply an offset adjustment technique in the current block. In this case, the other offset parameters of the current block need not be parsed any more.

In operation 42, the offset determiner 34 may determine a first offset parameter by using a second offset parameter of a left or upper block, based on offset mergence information. In this case, the offset determiner 34 may not extract the first offset parameters of the current block and may reconstruct the first offset parameter by using the reconstructed second offset parameter.

In operation 42, the offset determiner 34 may determine the first offset parameter without using the second offset parameter, based on offset mergence information. In this case, the offset determiner 34 may reconstruct the first offset parameter by extracting the first offset parameter subsequent to the offset mergence information from the bitstream.

In operation 42, the parameter determiner 34 may determine offset values corresponding to a predetermined number of categories from the offset parameter. Each of the offset values may be greater than or equal to a preset minimum value and may be less than or equal to a preset maximum value.

In operation 42, when the offset type information indicates the edge type, the offset determiner 34 may determine edge directions of reconstructed pixels included in the current block as one of 0°, 90°, 45°, or 135°, based on the class of the current block.

In operation 42, when the offset type information indicates the band type, the offset determiner 34 may determine whether the offset absolute value is 0. When the offset absolute value is 0, the offset determiner 34 may not determine sign information of the offset value. When the offset absolute value is not 0, the offset determiner 34 may not determine sign information of the offset value based on the received bitstream. Also, the offset determiner 34 may determine a band to which the sample values of the reconstructed pixels belong, based on the offset class indicating the band positions of the reconstructed pixels included in the current block.

In operation 43, the pixel compensator 36 may compensate for the sample values of the reconstructed pixels of the current block by using the offset of the current block determined by the offset determiner 34.

Also, in operation 43, the pixel compensator 36 may compensate for the sample values of the reconstructed pixels with respect to coding units having a tree structure, which are divided from the current block.

The video decoding apparatus 30 according to an embodiment may include a central processor (not shown) for collectively controlling the extractor 32, the offset determiner 34, and the pixel compensator 36. Alternatively, the extractor 32, the offset determiner 34, and the pixel compensator 36 may be driven by their individual processors (not shown) that cooperatively operate to control the video decoding apparatus 30. Alternatively, an external processor (not shown) outside the video decoding apparatus 30 may control the extractor 32, the offset determiner 34, and the pixel compensator 36.

The video decoding apparatus 30 may include one or more data storages (not shown) for storing input and output data of the extractor 32, the offset determiner 34, and the pixel compensator 36. The video decoding apparatus 30 may include a memory controller (not shown) for managing data input and output to and from the data storages (not shown).

In order to perform a video decoding operation to reconstruct a video, the video decoding apparatus 30 according to an embodiment may operate in association with an internal or external video decoding processor and thus may perform the video decoding operation. The internal video decoding processor of the video decoding apparatus 30 may be an independent processor for performing a basic video decoding operation. Also, the video decoding apparatus 30, a central processing unit, or a graphic processing unit may include a video decoding processor module to perform a basic video decoding operation.

The video encoding apparatus 10 and the video decoding apparatus 30 described above with reference to FIGS. 1 through 4 use a sample adaptive offset (SAO) technique in order to minimize an error between original pixels and reconstructed pixels. According to the SAO technique, the video encoding apparatus 10 classifieds pixels of each image block into preset pixel groups, allocates each pixel to a corresponding pixel group, and encodes an offset value indicating an average value of errors between the original pixels and the reconstructed pixels included in the same pixel group.

Samples are signaled between the video encoding apparatus 10 and the video decoding apparatus 40. That is, the video encoding apparatus 10 may encode and transmit samples in the form of a bitstream, and the video decoding apparatus 30 may parse and reconstruct the samples from the received bitstream. In order to minimize an error between original pixels and reconstructed pixels by adjusting sample values of the reconstructed pixels by an offset determined according to pixel classification, the video encoding apparatus 10 and the video decoding apparatus 30 signal offset parameters. Between the video encoding apparatus 10 and the video decoding apparatus 30, signaling is performed such that offset values are encoded, transceived, and decoded as the offset parameters.

Thus, according to an SAO technique, the video decoding apparatus 30 may generate a reconstructed image having a minimized error between an original image and the reconstructed image by decoding a received bitstream, generating reconstructed pixels of each of image blocks, reconstructing offset values from the bitstream, and adjusting the reconstructed pixels by the offset values.

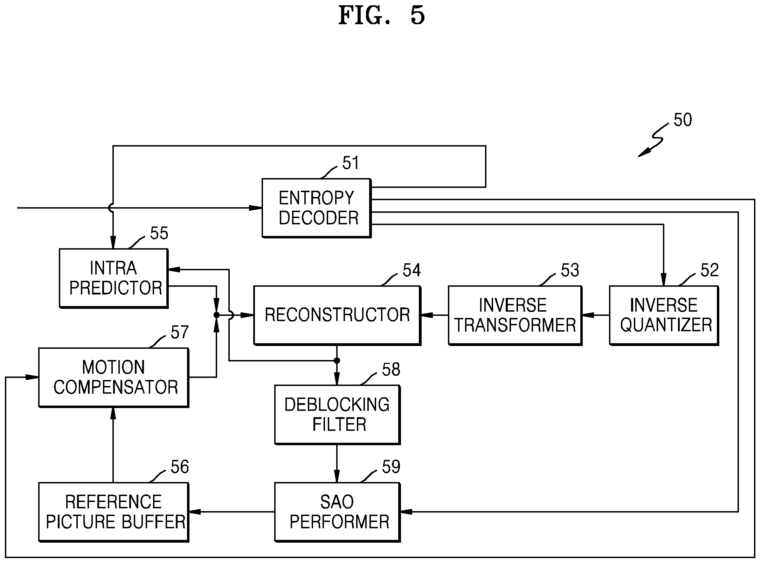

Hereinafter, a video decoding method using the SAO technique will now be described in detail with reference to FIG. 5. FIG. 5 is a block diagram of a video decoding apparatus 50 according to another embodiment of the present disclosure.

The video decoding apparatus 50 includes an entropy decoder 51, an inverse quantizer 52, an inverse transformer 53, a reconstructor 54, an intra predictor 55, a reference picture buffer 56, a motion compensator 57, a deblocking filter 58, and an SAO filter 59.

The video decoding apparatus 50 may receive a bitstream including encoded video data. The entropy decoder 51 may parse intra mode information, inter mode information, SAO information, and residues from the bitstream.

The residues extracted by the entropy decoder 51 may be quantized transformation coefficients. Accordingly, the inverse quantizer 52 may perform inverse quantization on the residues to reconstruct transformation coefficients, and the inverse transformer 53 may perform inverse transformation on the reconstructed coefficients to reconstruct residual values of the spatial domain.

In order to predict and reconstruct the residual values of the spatial domain, intra prediction or motion compensation may be performed.

If the intra mode information is extracted by the entropy decoder 51, the intra predictor 55 may determine reference samples to be referred to reconstruct current samples from among samples spatially adjacent to the current samples, by using the intra mode information. The reference samples may be selected from among samples previously reconstructed by the reconstructor 54. The reconstructor 54 may reconstruct the current samples by using the reference samples determined based on the intra mode information and the residual values reconstructed by the inverse transformer 53.

If the inter mode information is extracted by the entropy decoder 51, the motion compensator 57 may determine a reference picture to be referred to reconstruct current samples of a current picture from among pictures reconstructed previously to the current picture, by using the inter mode information. The inter mode information may include motion vectors, reference indices, etc. By using the reference indices, from among pictures reconstructed previously to the current picture and stored in the reference picture buffer 56, a reference picture to be used to perform motion compensation on the current samples may be determined. By using the motion vectors, a reference block of the reference picture to be used to perform motion compensation on a current block may be determined. The reconstructor 54 may reconstruct the current samples by using the reference block determined based on the inter mode information and the residual values reconstructed by the inverse transformer 53.

The reconstructor 54 may reconstruct samples and may output reconstructed pixels. The reconstructor 54 may generate reconstructed pixels of each of LCUs based on coding units having a tree structure.

The deblocking filter 58 may perform filtering for reducing a blocking phenomenon of pixels disposed at edge regions of the LCU or each of the coding units having a tree structure.

Also, the SAO filter 59 may adjust offsets of reconstructed pixels of each LCU according to an SAO technique. The SAO filter 59 may determine an offset type, an offset class, and offset values of a current LCU based on the SAO information extracted by the entropy decoder 51.

An operation of extracting the SAO information by the entropy decoder 51 may correspond to an operation of the offset parameter extractor 32 of the video decoding apparatus 30, and operations of the SAO filter 59 may correspond to operations of the offset determiner 34 and the pixel compensator 36 of the video decoding apparatus 30.

The SAO filter 59 may determine signs and difference values of the offset values with respect to the reconstructed pixels of the current LCU based on the offset values determined from the SAO information. The SAO filter 59 may reduce errors between the reconstructed pixels and original pixels by increasing or reducing sample values of the reconstructed pixels by the difference values determined based on the offset values.

A picture including the reconstructed pixels offset-adjusted by the SAO filter 59 may be stored in the reference picture buffer 56. Thus, by using a reference picture having minimized errors between reconstructed samples and original pixels according to an SAO technique, motion compensation may be performed on a next picture.

According to the SAO technique, based on difference values between reconstructed pixels and original pixels, an offset of a pixel group including the reconstructed pixels may be determined. For the SAO technique, embodiments for classifying reconstructed pixels into pixel groups will now be described in detail.

According to an SAO technique, pixels may be classified (i) based on an edge type of reconstructed pixels, or (ii) a band type of reconstructed pixels. Whether pixels are classified based on an edge type or a band type may be defined by using an offset type.

An embodiment of classifying pixels based on an edge type according to an SAO technique will now be described in detail.

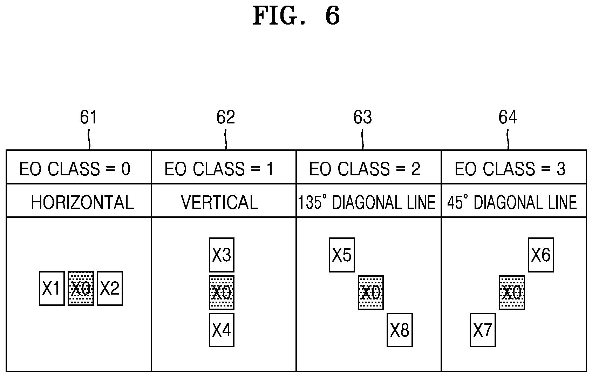

When edge-type offsets of a current LCU are determined, an edge class of some reconstructed pixels included in the current LCU may be determined. That is, by comparing sample values of current reconstructed pixels and adjacent pixels, an edge class of the current reconstructed pixels may be defined. An example of determining an edge class will now be described with reference to FIG. 6.

FIG. 6 is a table showing edge classes of edge types, according to an embodiment. Indices 0, 1, 2, and 3 may be sequentially allocated to edge classes 61, 62, 63, and 64. If an edge type frequently occurs, a small index may be allocated to the edge type.

An edge class may indicate a direction of 1-dimensional edges formed between a current reconstructed pixel X0 and two adjacent pixels. The edge class 61 having the index 0 indicates a case when edges are formed between the current reconstructed pixel X0 and two horizontally adjacent pixels X1 and X2. The edge class 62 having the index 1 indicates a case when edges are formed between the current reconstructed pixel X0 and two vertically adjacent pixels X3 and X4. The edge class 63 having the index 2 indicates a case when edges are formed between the current reconstructed pixel X0 and two 135°-diagonally adjacent pixels X5 and X8. The edge class 64 having the index 3 indicates a case when edges are formed between the current reconstructed pixel X0 and two 45°-diagonally adjacent pixels X6 and X7.

Accordingly, by analyzing edge directions of reconstructed pixels included in a current LCU and thus determining a strong edge direction in the current LCU, an edge class of the current LCU may be determined.

With respect to each edge class, categories may be classified according to an edge shape of a current pixel. An example of categories according to edge shapes will now be described with reference to FIGS. 7A and 7B.

FIGS. 7A and 7B are a table and a graph showing categories of edge types, according to an embodiment.

An edge category indicates whether a current pixel corresponds to a lowest point of a concave edge, a pixel disposed at a curved corner around a lowest point of a concave edge, a highest point of a convex edge, or a pixel disposed at a curved corner around a highest point of a convex edge.

FIG. 7A exemplarily shows conditions for determining categories of edges. FIG. 7B exemplarily shows edge shapes between a reconstructed pixel and adjacent pixels and their sample values c, a, and b.

C indicates an index of a current reconstructed pixel, and a and b indicate indices of adjacent pixels at two sides of the current reconstructed pixel according to an edge direction. Xa, Xb, and Xc respectively indicate sample values of reconstructed pixels having the indices a, b, and c. In FIG. 7B, an X-axis indicate indices of the current reconstructed pixel and the adjacent pixels at two sides of the current reconstructed pixel, and a Y-axis indicate sample values of each of samples.

In the graph of FIG. 7B, a Y-axis may indicate values obtained by scaling the sample values of the samples, based on predetermined scale information. For example, when sample values of some pixels are shifted in a right direction, based on the predetermined scale information, an effect due to noises may be reduced.

Category 1 indicates a case when a current pixel corresponds to a lowest point of a concave edge, i.e., a local valley. As shown in graph 71 (Xc<Xa && Xc<Xb), if the current reconstructed pixel c between the adjacent pixels a and b corresponds to a lowest point of a concave edge, the current reconstructed pixel may be classified as the category 1.

Category 2 indicates a case when a current pixel is disposed at a curved corner around a lowest point of a concave edge, i.e., a concave corner. As shown in graph 72 (Xc<Xa && Xc==Xb), if the current reconstructed pixel c between the adjacent pixels a and b is disposed at an end point of a downward curve of a concave edge or, as shown in graph 73 (Xc==Xa && Xc<Xb), if the current reconstructed pixel c is disposed at a start point of an upward curve of a concave edge, the current reconstructed pixel may be classified as the category 2.

Category 3 indicates a case when a current pixel is disposed at a curved corner around a highest point of a convex edge, i.e., a convex corner. As shown in graph 74 (Xc>Xb && Xc==Xa), if the current reconstructed pixel c between the adjacent pixels a and b is disposed at a start point of a downward curve of a convex edge or, as shown in graph 75 (Xc==Xb && Xc>Xa), if the current reconstructed pixel c is disposed at an end point of an upward curve of a convex edge, the current reconstructed pixel may be classified as the category 3.

Category 4 indicates a case when a current pixel corresponds to a highest point of a convex edge, i.e., a local peak. As shown in graph 76 (Xc>Xa && Xc>Xb), if the current reconstructed pixel c between the adjacent pixels a and b corresponds to a highest point of a convex edge, the current reconstructed pixel may be classified as the category 1.

The determination of categories as described above may be expressed as one of Equations (2) through (4) below:

$$\text{Category} = 2 + \text{Sign}((z1+\text{roundOffset})>>\text{eoOffsetBitShift}) + \text{Sign}((z2+\text{roundOffset})>>\text{eoOffsetBitShift}) \ ...\ (2)$$

$$\text{Category} = 2 + \text{Sign}(z1)*(\text{Abs}(z1) >> \text{eoOffsetBitShift}) + \text{Sign}(z2)*(\text{Abs }(z2)>> \text{eoOffsetBitShift})... (3)$$

$$\text{Category} = 2 + \text{Sign}(((p1) >> \text{eoOffsetBitShift}) ? ((p0) >> \text{eoOffsetBitShift})) + \text{Sign}( ((p1) >> \text{eoOffsetBitShift}) ? ((p2)>> \text{eoOffsetBitShift})) \ ...\ .(4)$$

roundOffset is a value for rounding off. roundOffset may be (1<<(eoOffsetBitShift - 1)). Also, when the rounding-off is not used, roundOffset may be 0. p0 indicates a sample value of a previous pixel. p1 indicates a sample value of a current pixel. p2 indicates a sample value of a next pixel. z1 indicates p1-p0. z2 indicates p1-p2. eoOffsetBitShift is information for scaling the sample value. When the sample value scaled by eoOffsetBitShift is used, an effect due to noise may be reduced.

If the current reconstructed pixel does not satisfy any of the conditions of the categories 1, 2, 3, and 4, the current reconstructed pixel does not corresponds to an edge and thus is classified as category 0, and an offset of category 0 does not need to be encoded.

According to an embodiment, with respect to reconstructed pixels corresponding to the same category, an average value of difference values between the reconstructed pixels and original pixels may be determined as an offset of a current category. Also, offsets of some categories may be determined.

The concave edges of the categories 1 and 2 may be smoothed if sample values of reconstructed pixels are adjusted by using positive offset values, and may be sharpened due to negative offset values. The convex edges of the categories 3 and 4 may be smoothed due to negative offset values and may be sharpened due to positive offset values.

The video encoding apparatus 10 according to an embodiment may not allow the sharpening effect of edges. Here, the concave edges of the categories 1 and 2 need positive offset values, and the convex edges of the categories 3 and 4 need negative offset values. In this case, if a category of an edge is known, a sign of an offset value may be determined. Accordingly, the video encoding apparatus 10 and the video decoding apparatus 30 may not exchange the sign of the offset value and may exchange only an absolute value of the offset value.

Accordingly, the video encoding apparatus 10 may encode and transmit offset values according to categories of a current edge class, and the video decoding apparatus 30 may adjust reconstructed pixels of the categories by the received offset values.

For example, if an offset value of an edge type is determined as 0, the video encoding apparatus 10 may transmit the absolute value and the scale parameter as the offset value. It is not required for the video encoding apparatus 10 to transmit the sign of the offset value.

In a case of the edge type, the video decoding apparatus 30 may parse the absolute value of the offset value. The sign of the offset value may be predicted according to an edge category based on an edge shape between a reconstructed pixel and adjacent pixels.

Accordingly, the video encoding apparatus 10 according to an embodiment may classify pixels according to edge directions and edge shapes, may determine an average error value between pixels having the same characteristics as an offset value, and may determine offset values according to categories. The video encoding apparatus 10 may encode and transmit offset type information indicating an edge type, offset class information indicating an edge direction, and the offset values.

The video decoding apparatus 30 according to an embodiment may receive the offset type information, the offset values, and the offset class information, and when the offset type information indicates the edge type, the video decoding apparatus 30 may determine an edge direction according to the offset class information. The video decoding apparatus 30 may determine an offset value of reconstructed pixels of a category corresponding to an edge shape, and may adjust sample values of the reconstructed pixels by the offset value, thereby minimizing an error between an original image and a reconstructed image.

Next, an embodiment of classifying pixels based on a band type according to an SAO technique will now be described in detail.

According to an embodiment, each of sample values of reconstructed pixels may belong to one of a plurality of bands. For example, the sample values may have a total range from a minimum value Min of 0 to a maximum value Max of $2^{(p-1)}$ according to p-bit sampling. If the total range (Min, Max) of the sample values is divided into K periods, each period of the sample values is referred to as a band. If $B_k$ indicates a maximum value of a kth band, bands $[B_0, B_1-1]$, $[B_1, B_2-1]$, $[B_2, B_3-1]$, ..., and $[B_k-1, B_k]$ may be divided. If a sample value of a current reconstructed pixel Rec(x, y) belongs to the band $[B_k-1, B_k]$, a current band may be determined as k. The bands may be equally or unequally divided.

For example, if sample values are classified into equal 8-bit pixel bands, the sample values may be divided into 32 bands. In more detail, they may be classified into bands [0, 7], [8, 15], ..., [240, 247], and [248, 255].

From among a plurality of bands classified according to a band type, a band to which each of sample values of reconstructed pixels belongs may be determined. Also, an offset value indicating an average of errors between original pixels and reconstructed pixels in each band may be determined.

Accordingly, the video encoding apparatus 10 may encode and transmit an offset corresponding to each of bands classified according to a current band type, and may adjust reconstructed pixels by the offset. Also, the video decoding apparatus 30 may encode and receive an offset corresponding to each of bands classified according to a current band type, and may adjust reconstructed pixels by the offset.

Accordingly, with respect to a band type, the video encoding apparatus 10 and the video decoding apparatus 30 may classify reconstructed pixels according to bands to which their sample values belong, may determine an offset as an average of error values of reconstructed pixels that belong to the same band, and may adjust the reconstructed pixels by the offset, thereby minimizing an error between an original image and a reconstructed image. When an offset according to a band type is determined, the video encoding apparatus 10 and the video decoding apparatus 30 may classify reconstructed pixels into categories according to a band position. For example, if the total range of the sample values is divided into K bands, categories may be indexed according to a band index k indicating a kth band. The number of categories may be determined to correspond to the number of bands.

However, in order to reduce data, the video encoding apparatus 10 and the video decoding apparatus 30 may restrict the number of categories used to determine offsets according to an SAO technique. For example, a predetermined number of bands that are continuous from a band having a predetermined start position in a direction in which a band index is increased may be allocated as categories, and only an offset of some categories may be determined.

For example, if a band having an index of 12 is determined as a start band, four bands from the start band, i.e., bands having indices of 12, 13, 14, and 15 may be allocated as categories 1, 2, 3, and 4. Accordingly, an average error between reconstructed pixels and original pixels included in a band having the index of 12 may be determined as an offset of category 1. Likewise, an average error between reconstructed pixels and original pixels included in a band having the index of 13 may be determined as an offset of category 2, an average error between reconstructed pixels and original pixels included in a band having the index of 14 may be determined as an offset of category 3, and an average error between reconstructed pixels and original pixels included in a band having the index of 15 may be determined as an offset of category 4.

In this case, information about a start band position is required to determine positions of bands allocated as categories. Accordingly, the video encoding apparatus 10 may encode and transmit the information about the start band position as the offset class. The video encoding apparatus 10 may encode and transmit an offset type indicating a band type, an offset class, and offset values according to categories.

The video decoding apparatus 30 may receive the offset type, the offset class, and the offset values according to the categories. If the received offset type is a band type, the video decoding apparatus 30 may read a start band position from the offset class. The video decoding apparatus 30 may determine a band to which reconstructed pixels belong, from among four bands from the start band, may determine an offset value allocated to a current band from among the offset values according to the categories, and may adjust sample values of the reconstructed pixels by the offset value.

Hereinabove, an edge type and a band type are introduced as offset types, and an offset class and a category according to the offset type are described in detail. Hereinafter, offset parameters encoded and transceived by the video encoding apparatus 10 and the video decoding apparatus 30 will now be described in detail.

The video encoding apparatus 10 and the video decoding apparatus 30 may determine an offset type according to a pixel classification method of reconstructed pixels of each LCU.

The offset type may be determined according to image characteristics of some blocks. For example, with respect to an LCU including a vertical edge, a horizontal edge, and a diagonal edge, in order to change edge values, offset values may be determined by classifying sample values according to an edge type. With respect to an LCU not including an edge region, offset values may be determined according to band classification. Accordingly, the video encoding apparatus 10 and the video decoding apparatus 30 may signal the offset type with respect to each of LCUs.

The video encoding apparatus 10 and the video decoding apparatus 30 may determine offset parameters with respect to each LCU. That is, offset types of reconstructed pixels of an LCU may be determined, the reconstructed pixels of the LCU may be classified into categories, and offset values may be determined according to the categories.

From among the reconstructed pixels included in the LCU, the video encoding apparatus 10 may determine an average error of reconstructed pixels classified into the same category, as an offset value. An offset value of each category may be determined.

According to an embodiment, the offset parameters may include an offset type, offset values, and an offset class. The offset value may be expressed as at least one of an offset absolute value and a scale parameter. The video encoding apparatus 10 and the video decoding apparatus 30 may transceive the offset parameters determined with respect to each LCU.

From among offset parameters of an LCU, the video encoding apparatus 10 according to an embodiment may encode and transmit the offset type and the offset values. If the offset type is an edge type, the video encoding apparatus 10 may further transmit an offset class indicating an edge direction, which is followed by the offset type and the offset values according to categories. If the offset type is a band type, the video encoding apparatus 10 may further transmit an offset class indicating a start band position, which is followed by the offset type and the offset values according to categories.

The video decoding apparatus 30 according to an embodiment may receive the offset parameters of each LCU, which includes the offset type, the offset values, and the offset class. Also, the video decoding apparatus 30 according to an embodiment may select an offset value of a category to which each reconstructed pixel belongs, from among the offset values according to categories, and may adjust the reconstructed pixel by the selected offset value.

An embodiment of transceiving offset values from among offset parameters will now be described.

However, as described above, with respect to the edge type, since the offset value may be predicted as a positive number or a negative number according to a category, the sign information does not need to be transmitted.

According to an embodiment, an offset value Off-set may be previously restricted within a range from a minimum value MinOffSet and a maximum value MaxOffSet before the offset value is determined (MinOffSet ≤ Off-Set ≤ MaxOffSet). The video encoding apparatus 10 may determine the maximum value MaxOffSet, based on a bit depth.

For example, with respect to an edge type, offset values of reconstructed pixels of categories 1 and 2 may be determined within a range from a minimum value of 0 to a maximum value of 7. With respect to the edge type, offset values of reconstructed pixels of categories 3 and 4 may be determined within a range from a minimum value of -7 to a maximum value of 0.

For example, with respect to a band type, offset values of reconstructed pixels of all categories may be determined within a range from a minimum value of -7 to a maximum value of 7.

In order to reduce transmission bits of an offset value, a remainder may be restricted to a p-bit value instead of a negative number. In this case, the remainder may be greater than or equal to 0 and may be less than or equal to a difference value between the maximum value and the minimum value ($0 \leq$ Remainder $\leq$ MaxOffSet - MinOffSet + 1 $\leq 2$^p). If the video encoding apparatus 10 transmits the remainder and the video decoding apparatus 30 knows at least one of the maximum value and the minimum value of the offset value, an original offset value may be reconstructed by using only the received remainder.

Hereinafter, from among offset parameter components, offset mergence information will now be described in detail.

Offset types and/or offset values of adjacent blocks may be probably the same. The video encoding apparatus 10 according to an embodiment may compare offset parameters of a current block to offset parameters of adjacent blocks and may merge and encode the offset parameters of the current block and the adjacent blocks if the offset parameters are the same. If the offset parameters of the adjacent block are previously encoded, the offset parameters of the current block may be determined by using the offset parameters of the adjacent block. Accordingly, the video encoding apparatus 10 may not encode the offset parameters of the current block and may encode only the offset mergence information of the current block.

Before the offset parameters are parsed from a received bitstream, the video decoding apparatus 30 may initially parse the offset mergence information and may determine whether to parse the offset parameters. The video decoding apparatus 30 may determine the offset parameter of the current block by using offset parameters of adjacent blocks, based on the offset mergence information of the current block.

For example, if the adjacent blocks having the same offset parameters as those of the current block exist based on the offset mergence information, the video decoding apparatus 30 may not parse the offset parameters of the current block and may determine the offset parameter of the current block by using a reconstructed offset parameter of an adjacent block. Accordingly, the video decoding apparatus 30 may reconstruct the offset parameters of the current block to be the same as those of the adjacent block. Also, based on the offset mergence information, an adjacent block having offset parameters to be referred to may be determined. For example, whether to use an offset parameter of a left block of the current block may be determined. Also, whether to use an offset parameter of an upper block of the current block may be determined.

For example, if the offset parameters of the adjacent blocks are different from the offset parameters of the current block based on the offset mergence information, the video decoding apparatus 30 may parse and reconstruct the offset parameters of the current block from the bitstream.

FIG. 8 is a block diagram of a video encoding apparatus based on coding units according to tree structure 100, according to an embodiment of the present disclosure.

The video encoding apparatus based on coding units according to tree structure 100 according to the embodiment includes an LCU splitter 110, a coding unit determiner 120, and an output unit 130. Hereinafter, for convenience of description, the video encoding apparatus based on coding units according to tree structure 100 according to the embodiment will be abbreviated to the 'video encoding apparatus 100'.

The LCU splitter 110 may split a current picture based on an LCU that is a coding unit having a maximum size for a current picture of an image. If the current picture is larger than the LCU, image data of the current picture may be split into the at least one LCU. The LCU according to an embodiment of the present disclosure may be a data unit having a size of 32×32, 64×64, 128×128, 256×256, etc., wherein a shape of the data unit is a square having a width and length in squares of 2. The image data may be output to the coding unit determiner 120 according to the at least one LCU.

A coding unit according to an embodiment may be characterized by a maximum size and a depth. The depth denotes the number of times the coding unit is spatially split from the LCU, and as the depth deepens, deeper coding units according to depths may be split from the LCU to a smallest coding unit (SCU). A depth of the LCU is an uppermost depth and a depth of the SCU is a lowermost depth. Since a size of a coding unit corresponding to each depth decreases as the depth of the LCU deepens, a coding unit corresponding to an upper depth may include a plurality of coding units corresponding to lower depths.

As described above, the image data of the current picture is split into the LCUs according to a maximum size of the coding unit, and each of the LCUs may include deeper coding units that are split according to depths. Since the LCU according to an embodiment is split according to depths, the image data of the spatial domain included in the LCU may be hierarchically classified according to depths.

A maximum depth and a maximum size of a coding unit, which limit the total number of times a height and a width of the LCU are hierarchically split, may be predetermined.

The coding unit determiner 120 encodes at least one split region obtained by splitting a region of the LCU according to depths, and determines a depth to output a finally encoded image data according to the at least one split region. That is, the coding unit determiner 120 determines a coded depth by encoding the image data in the deeper coding units according to depths, according to the LCU of the current picture, and selecting a depth having the least encoding error. The determined coded depth and the encoded image data according to the determined coded depth are output to the output unit 130.

The image data in the LCU is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each LCU.

The size of the LCU is split as a coding unit is hierarchically split according to depths, and as the number of coding units increases. Also, even if coding units correspond to the same depth in one LCU, it is determined whether to split each of the coding units corresponding to the same depth to a lower depth by measuring an encoding error of the image data of the each coding unit, separately. Accordingly, even when image data is included in one LCU, the encoding errors may differ according to regions in the one LCU, and thus the coded depths may differ according to regions in the image data. Thus, one or more coded depths may be determined in one LCU, and the image data of the LCU may be divided according to coding units of at least one coded depth.

Accordingly, the coding unit determiner 120 according to an embodiment may determine coding units having a tree structure included in the LCU. The 'coding units having a tree structure' according to an embodiment include coding units corresponding to a depth determined to be the coded depth, from among all deeper coding units included in the LCU. A coding unit of a coded depth may be hierarchically determined according to depths in the same region of the LCU, and may be independently determined in different regions. Similarly, a coded depth in a current region may be independently determined from a coded depth in another region.

A maximum depth according to an embodiment is an index related to the number of splitting times from an LCU to an SCU. A first maximum depth according to an embodiment may denote the total number of splitting times from the LCU to the SCU. A second maximum depth according to an embodiment may denote the total number of depth levels from the LCU to the SCU. For example, when a depth of the LCU is 0, a depth of a coding unit, in which the LCU is split once, may be set to 1, and a depth of a coding unit, in which the LCU is split twice, may be set to 2. Here, if the SCU is a coding unit in which the LCU is split four times, 5 depth levels of depths 0, 1, 2, 3, and 4 exist, and thus the first maximum depth may be set to 4, and the second maximum depth may be set to 5.

Prediction encoding and transformation may be performed according to the LCU. The prediction encoding and the transformation are also performed based on the deeper coding units according to a depth equal to or depths less than the maximum depth, according to the LCU.

Since the number of deeper coding units increases whenever the LCU is split according to depths, encoding, including the prediction encoding and the transformation, is performed on all of the deeper coding units generated as the depth deepens. For convenience of description, the prediction encoding and the transformation will now be described based on a coding unit of a current depth, in an LCU.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also may select a data unit different from the coding unit so as to perform the prediction encoding on the image data in the coding unit.

In order to perform prediction encoding in the LCU, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit and a data unit obtained by splitting at least one of a height and a width of the prediction unit. A partition is a data unit where a prediction unit of a coding unit is split, and a prediction unit may be a partition having the same size as a coding unit.

For example, when a coding unit of 2N×2N (where N is a positive integer) is no longer split and becomes a prediction unit of 2N×2N, and a size of a partition may be 2N×2N, 2N×N, N×2N, or N×N. Examples of a partition type may selectively include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, or partitions having arbitrary shapes.

A prediction mode of the prediction unit may be at least one of an intra mode, a inter mode, and a skip mode. For example, the intra mode or the inter mode may be performed on the partition of 2N×2N, 2N×N, N×2N, or N×N. Also, the skip mode may be performed only on the partition of 2N×2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of $2N \times 2N$, a transformation depth may be 0 when the size of a transformation unit is $2N \times 2N$, may be 1 when the size of the transformation unit is $N \times N$, and may be 2 when the size of the transformation unit is $N/2 \times N/2$. That is, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

Coding units according to a tree structure in an LCU and methods of determining a prediction unit/partition, and a transformation unit, according to embodiments of the present disclosure, will be described in detail below with reference to FIGS. 7 through 19.

The coding unit determiner 120 may measure an encoding error of deeper coding units according to depths by using Rate-Distortion Optimization based on Lagrangian multipliers.

The output unit 130 outputs the image data of the LCU, which is encoded based on the at least one coded depth determined by the coding unit determiner 120, and information about the encoding mode according to the coded depth, in bitstreams.

The encoded image data may be obtained by encoding residues of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one LCU, and information about at least one encoding mode is determined for a coding unit of a coded depth, information about at least one encoding mode may be determined for one LCU. Also, a coded depth of the image data of the LCU may be different according to locations since the image data is hierarchically split according to depths, and thus information about the coded depth and the encoding mode may be set for the image data.

Accordingly, the output unit 130 according to an embodiment may assign encoding information about a corresponding coded depth and an encoding mode to at least one of the coding unit, the prediction unit, and a minimum unit included in the LCU.

The minimum unit according to an embodiment is a square data unit obtained by splitting the SCU constituting the lowermost depth by 4. Alternatively, the minimum unit according to an embodiment may be a maximum square data unit that may be included in all of the coding units, prediction units, partition units, and transformation units included in the LCU.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output offset parameters related to the offset adjustment technique described above with reference to FIGS. 1 through 7.

In the video encoding apparatus 100 according to the simplest embodiment, the deeper coding unit may be a coding unit obtained by dividing a height or width of a coding unit of an upper depth, which is one layer above, by two.

In other words, when the size of the coding unit of the current depth is 2N×2N, the size of the coding unit of the lower depth is N×N. Also, the coding unit with the current depth having a size of 2N×2N may include a maximum of 4 of the coding units with the lower depth.

Accordingly, the video encoding apparatus 100 may form the coding units having the tree structure by determining coding units having an optimum shape and an optimum size for each LCU, based on the size of the LCU and the maximum depth determined considering characteristics of the current picture. Also, since encoding may be performed on each LCU by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The video encoding apparatus 100 of FIG. 8 may perform operation of the video encoding apparatus 10 described above with reference to FIG. 1.

The coding unit determiner 120 may perform operation of the offset parameter determiner 14 of the video encoding apparatus 10. An offset type, offset values according to categories, and an offset class may be determined with respect to each LCU.

The output unit 130 may perform operation of the transmitter 16. Offset parameters determined with respect to each LCU may be output. Offset mergence information indicating whether to determine a current offset parameter by using an offset parameter of an LCU adjacent to a current LCU may be initially output. As an offset type, an off type, an edge type, or a band type may be output. An offset value may be output in an order of an offset absolute value and sign information. With respect to the edge type, the sign information of the offset value may not be output. Also, offset class information may be output.

If the offset mergence information of the current LCU allows adoption of the offset parameters of the adjacent LCU, the offset type and the offset values of the current LCU may not be output.

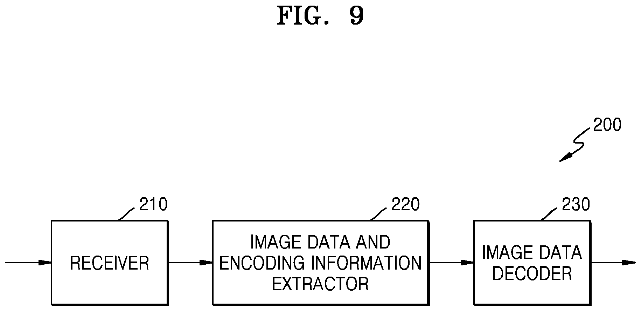

FIG. 9 is a block diagram of a video decoding apparatus based on coding units having a tree structure 200, according to an embodiment of the present disclosure.

The video decoding apparatus based on coding units having a tree structure 200 includes a receiver 210, an image data and encoding information extractor 220, and an image data decoder 230. Hereinafter, for convenience of description, the video decoding apparatus based on coding units having a tree structure 200 according to the embodiment will be abbreviated to the 'video decoding apparatus 200'.

Definitions of various terms, such as a coding unit, a depth, a prediction unit, a transformation unit, and information about various encoding modes, for decoding operations of the video decoding apparatus 200 are identical to those described with reference to FIG. 7 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each LCU, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each LCU, from the parsed bitstream. The extracted information about the coded depth and the encoding mode is output to the image data decoder 230. In other words, the image data in a bit stream is split into the LCU so that the image data decoder 230 decodes the image data for each LCU.

The information about the coded depth and the encoding mode according to the LCU may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each LCU extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each LCU. Accordingly, the video decoding apparatus 200 may reconstruct an image by decoding the image data according to a coded depth and an encoding mode that generates the minimum encoding error.

Since encoding information about the coded depth and the encoding mode may have been assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding LCU is recorded according to predetermined data units, the predetermined data units to which the same information about the coded depth and the encoding mode is assigned may be inferred to be the data units included in the same LCU.

The image data decoder 230 reconstructs the current picture by decoding the image data in each LCU based on the information about the coded depth and the encoding mode according to the LCUs. That is, the image data decoder 230 may decode the encoded image data based on the extracted information about the partition type, the prediction mode, and the transformation unit for each coding unit from among the coding units having the tree structure included in each LCU. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each LCU. Via the inverse transformation, a pixel value of the spatial domain of the coding unit may be reconstructed.

The image data decoder 230 may determine a coded depth of a current LCU by using split information according to depths. If the split information indicates that image data is no longer split in the current depth, the current depth is a coded depth. Accordingly, the image data decoder 230 may decode encoded data in the current LCU by using the information about the partition type of the prediction unit, the prediction mode, and the size of the transformation unit for each coding unit corresponding to the coded depth.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

Also, the video decoding apparatus 200 of FIG. 9 may perform operation of the video decoding apparatus 30 described above with reference to FIG. 3.

The image data and encoding information extractor 220 and the receiver 210 may perform operations of at least one of the extractor 32 and the offset determiner 34 of the video decoding apparatus 20. The image data decoder 230 may perform operations of at least one of the offset determiner 34 and the pixel compensator 36 of the video decoding apparatus 30.

If only offset mergence information is parsed from a bitstream without offset parameters of a current LCU, the image data and encoding information extractor 220 may reconstruct the current offset parameter by using at least one of adjacent offset parameters. For example, the image data and encoding information extractor 220 may reconstruct the current offset parameter to be similar to at least one of the adjacent offset parameters. Based on the offset mergence information, a parameter among the adjacent offset parameters which is to be referred to may be determined. If it is determined that the offset parameters of the current LCU are different from those of the adjacent LCUs based on the offset mergence information of the current LCU, which is parsed from the bitstream, the image data and encoding information extractor 220 may parse and reconstruct the offset parameters of the current LCU from the bitstream.

The image data and encoding information extractor 220 may parse an offset absolute value and a scale parameter from the bitstream. Also, the image data and encoding information extractor 220 may determine offset values, based on the offset absolute value and the scale parameter. For example, the image data and encoding information extractor 220 may determine the offset values by performing a shift operation on the offset absolute value by the scale parameter.

In addition, the image data and encoding information extractor 220 may parse a sign, the offset absolute value and the scale parameter from the bitstream. Also, the image data and encoding information extractor 220 may determine offset values, based on the sign, the offset absolute value and the scale parameter.

The image data and encoding information extractor 220 may parse offset parameters of each LCU from the bitstream. Based on the offset parameters, an offset type, offset values according to categories, and an offset class may be determined. If the offset type of the current LCU is an off type, offset adjustment on the current LCU may be terminated. If the offset type is an edge type, based on a category indicating an edge class indicating an edge direction of each of reconstructed pixels, and an edge shape, a current offset value may be selected from among received offset values. If the offset type is a band type, a band to which each of the reconstructed pixels belongs is determined and an offset value corresponding to a current band may be selected from among the offset values.

The image data decoder 230 may generate a reconstructed pixel capable of minimizing an error between an original pixel and the reconstructed pixel, by adjusting a pixel value of the reconstructed pixel by a corresponding offset value. Offsets of reconstructed pixels of each LCU may be adjusted based on the parsed offset parameters.

Thus, the video decoding apparatus 200 may obtain information about at least one coding unit that generates the minimum encoding error when encoding is recursively performed for each LCU, and may use the information to decode the current picture. In other words, the coding units having the tree structure determined to be the optimum coding units in each LCU may be decoded.

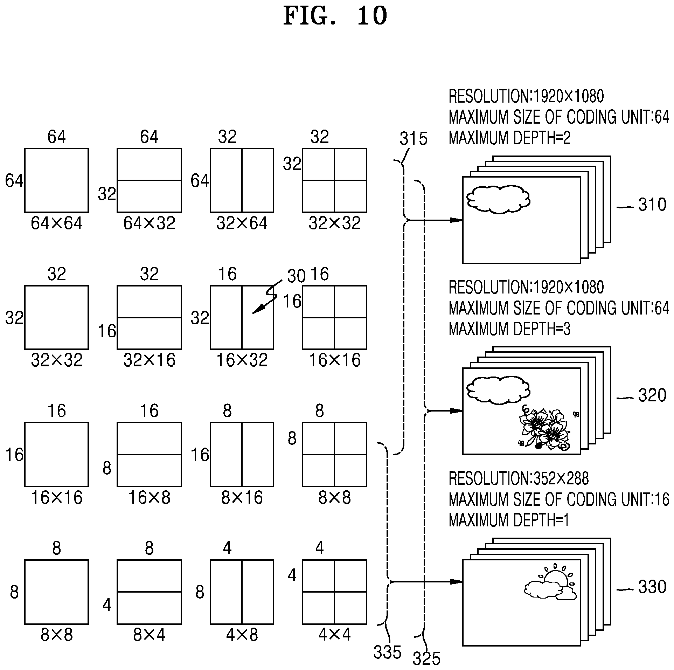

Accordingly, even if image data has high resolution and a large amount of data, the image data may be efficiently decoded and reconstructed by using a size of a coding unit and an encoding mode, which are adaptively determined according to characteristics of the image data, by using information about an optimum encoding mode received from an encoder. FIG. 10 is a diagram for describing a concept of coding units according to an embodiment of the present disclosure.

A size of a coding unit may be expressed by width × height, and may be 64×64, 32×32, 16×16, and 8×8. A coding unit of 64×64 may be split into partitions of 64×64, 64×32, 32×64, or 32×32, and a coding unit of 32×32 may be split into partitions of 32×32, 32×16, 16×32, or 16×16, a coding unit of 16×16 may be split into partitions of 16×16, 16×8, 8×16, or 8×8, and a coding unit of 8×8 may be split into partitions of 8×8, 8×4, 4×8, or 4×4.

In video data 310, a resolution is 1920×1080, a maximum size of a coding unit is 64, and a maximum depth is 2. In video data 320, a resolution is 1920×1080, a maximum size of a coding unit is 64, and a maximum depth is 3. In video data 330, a resolution is 352×288, a maximum size of a coding unit is 16, and a maximum depth is 1. The maximum depth shown in FIG. 10 denotes a total number of splits from an LCU to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include an LCU having a long axis size of 64, and coding units having long axis sizes of 32 and 16 since depths are deepened to two layers by splitting the LCU twice. Since the maximum depth of the video data 330 is 1, coding units 335 of the video data 330 may include an LCU having a long axis size of 16, and coding units having a long axis size of 8 since depths are deepened to one layer by splitting the LCU once.

Since the maximum depth of the video data 320 is 3, coding units 325 of the video data 320 may include an LCU having a long axis size of 64, and coding units having long axis sizes of 32, 16, and 8 since the depths are deepened to 3 layers by splitting the LCU three times. As a depth deepens, detailed information may be precisely expressed.

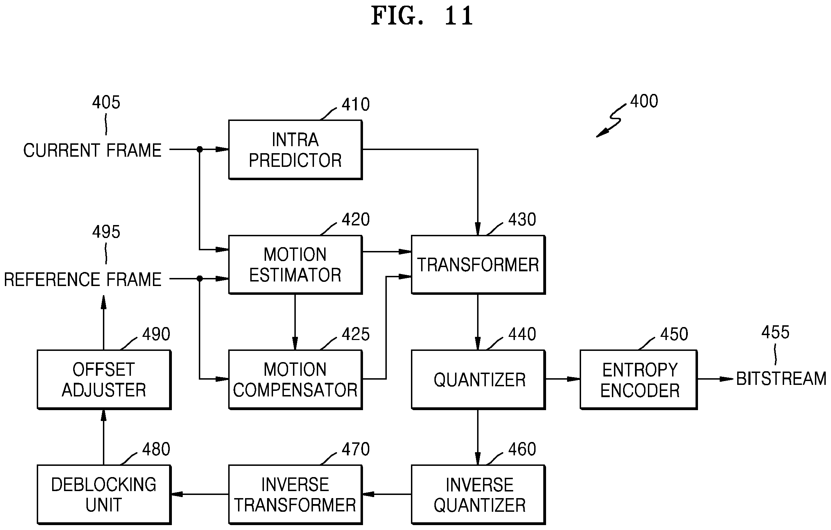

FIG. 11 is a block diagram of an image encoder 400 based on coding units, according to an embodiment of the present disclosure.

The image encoder 400 according to an embodiment performs operations of the coding unit determiner 120 of the video encoding apparatus 100 to encode image data. That is, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in the spatial domain through an inverse quantizer 460 and an inverse transformer 470, and the reconstructed data in the spatial domain is output as the reference frame 495 after being post-processed through a deblocking unit 480 and a loop filter 490. The quantized transformation coefficient may be output as a bitstream 455 through an entropy encoder 450.

In order for the image encoder 400 to be applied to the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the a loop filter 490 perform operations based on each coding unit among coding units having a tree structure while considering the maximum depth of each LCU.

Specifically, the intra predictor 410, the motion estimator 420, and the motion compensator 425 determines partitions and a prediction mode of each coding unit from among the coding units having a tree structure while considering the maximum size and the maximum depth of a current LCU, and the transformer 430 determines the size of the transformation unit in each coding unit from among the coding units having a tree structure.

The image encoder 400 may classify pixels according to an edge type (or a band type) of each LCU of the reference frame 495, may determine an edge direction (or a start band position), and may determine an average error value of reconstructed pixels included in each category. With respect to each LCU, offset mergence information, an offset type, and offset values may be encoded and signaled.

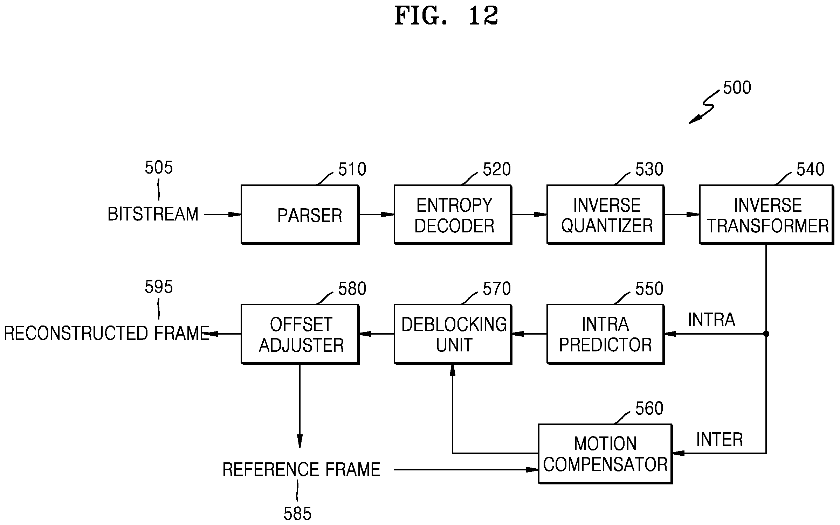

FIG. 12 is a block diagram of an image decoder 500 based on coding units, according to an embodiment of the present disclosure.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in the spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585. The image data in the spatial domain, which passed through the intra predictor 550 and the motion compensator 560, may be output as a reconstructed frame 595 after being post-processed through a deblocking unit 570 and a loop filter 580_. Also, the image data that is post-processed through the deblocking unit 570 and the loop filter 580 may be output as the reference frame 585.

In order to decode the image data in the image data decoder 230 of the video decoding apparatus 200, the image decoder 500 may perform operations that are performed after the parser 510.

In order for the image decoder 500 to be applied to the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the loop filter 580 perform operations based on coding units having a tree structure for each LCU.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

The image decoder 500 may extract offset parameters of LCUs from a bitstream. Based on offset mergence information from among the offset parameters of a current LCU, offset parameters of the current LCU may be reconstructed by using an offset parameter of a neighboring LCU. For example, the offset parameters of the current LCU may be reconstructed to be similar to the offset parameter of the neighboring LCU. By using an offset type and offset values from among the offset parameters of the current LCU, each of reconstructed pixels of LCUs of the reconstructed frame 595 may be adjusted by an offset value corresponding to a category according to the edge type or the band type.

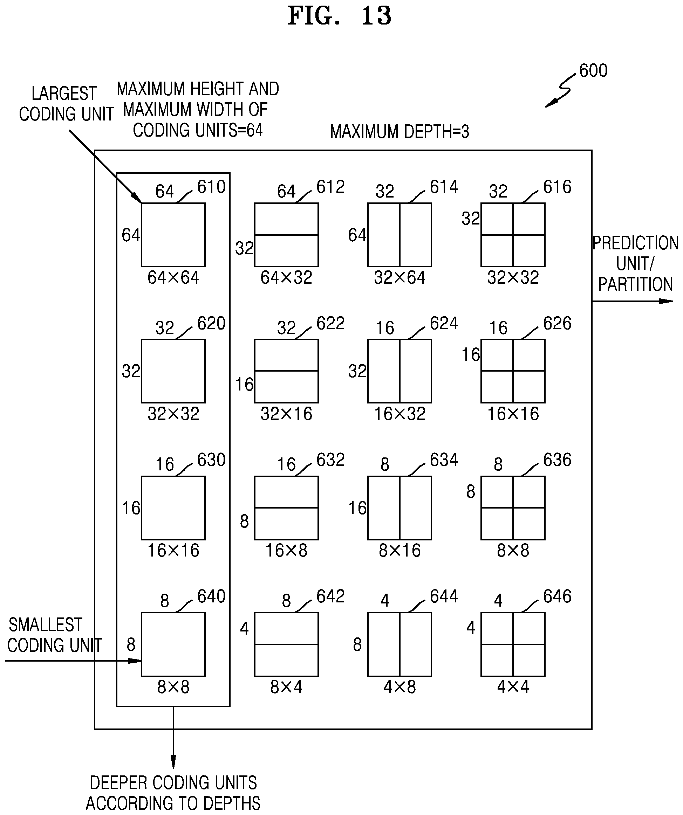

FIG. 13 is a diagram illustrating deeper coding units according to depths, and partitions, according to an embodiment of the present disclosure.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure 600 of coding units, according to an embodiment of the present disclosure, the maximum height and the maximum width of the coding units are each 64, and the maximum depth is 4. In this case, the maximum depth refers to a total number of times the coding unit is split from the LCU to the SCU. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is an LCU in the hierarchical structure 600, wherein a depth is 0 and a size, i.e., a height by width, is $64 \times 64$. The depth deepens along the vertical axis, and a coding unit 620 having a size of $32 \times 32$ and a depth of 1, a coding unit 630 having a size of $16 \times 16$ and a depth of 2, and a coding unit 640 having a size of $8 \times 8$ and a depth of 3. The coding unit 640 having a size of $4 \times 4$ and a depth of 3 is an SCU.

The prediction unit and the partitions of a coding unit are arranged along the horizontal axis according to each depth. In other words, if the coding unit 610 having a size of $64 \times 64$ and a depth of 0 is a prediction unit, the prediction unit may be split into partitions included in the coding unit 610 having a size of $64 \times 64$, i.e. a partition 610 having a size of $64 \times 64$, partitions 612 having the size of $64 \times 32$, partitions 614 having the size of $32 \times 64$, or partitions 616 having the size of $32 \times 32$.

Equally, a prediction unit of the coding unit 620 having the size of $32 \times 32$ and the depth of 1 may be split into partitions included in the coding unit 620 having a size of $32 \times 32$, i.e. a partition 620 having a size of $32 \times 32$, partitions 622 having a size of $32 \times 16$, partitions 624 having a size of $16 \times 32$, and partitions 626 having a size of $16 \times 16$.

Equally, a prediction unit of the coding unit 630 having the size of $16 \times 16$ and the depth of 2 may be split into partitions included in the coding unit 630 having a size of $16 \times 16$, i.e. a partition 630 having a size of $16 \times 16$, partitions 632 having a size of $16 \times 8$, partitions 634 having a size of $8 \times 16$, and partitions 636 having a size of $8 \times 8$.

Equally, a prediction unit of the coding unit 640 having the size of $8 \times 8$ and the depth of 3 may be split into partitions included in the coding unit 640 having a size of $8 \times 8$, i.e. a partition 640 having a size of $8 \times 8$, partitions 642 having a size of $8 \times 4$, partitions 644 having a size of $4 \times 8$, and partitions 646 having a size of $4 \times 4$.

In order to determine the at least one coded depth of the coding units constituting the LCU 610, the coding unit determiner 120 of the video encoding apparatus 100 according to an embodiment has to perform encoding for coding units corresponding to each depth included in the LCU 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

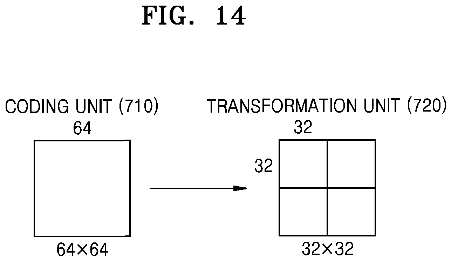

FIG. 14 is a diagram for describing a relationship between a coding unit and transformation units, according to an embodiment of the present disclosure.

The video encoding apparatus 100 according to an embodiment or the video decoding apparatus 200 according to an embodiment encodes or decodes an image according to coding units having sizes smaller than or equal to an LCU for each LCU. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of the coding unit 710 is 64×64, transformation may be performed by using the transformation units 720 having a size of 32×32.

Also, data of the coding unit 710 having the size of 64×64 may be encoded by performing the transformation on each of the transformation units having the size of 32×32, 16×6, 8×8, and 4×4, which are smaller than 64×64, and then a transformation unit having the least coding error may be selected.

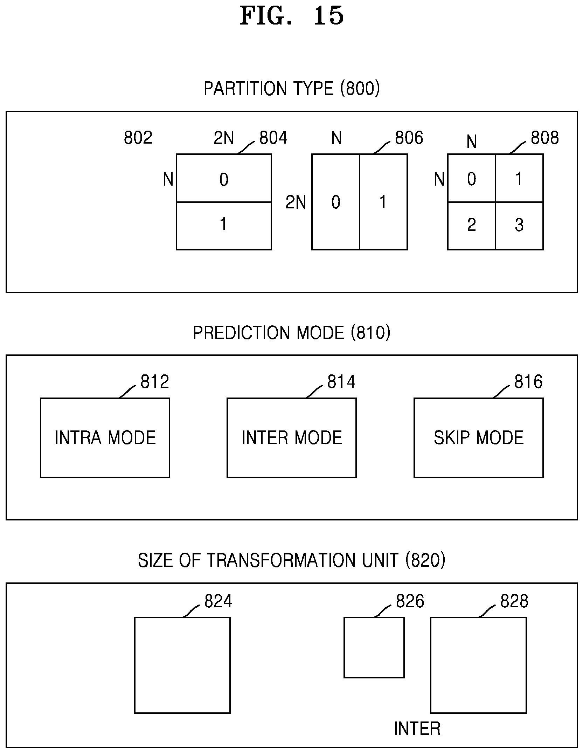

FIG. 15 is a diagram for describing a plurality of pieces of encoding information according to depths, according to an embodiment of the present disclosure.

The output unit 130 of the video encoding apparatus 100 according to an embodiment may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2N×2N may be split into any one of a partition 802 having a size of 2N×2N, a partition 804 having a size of 2N×N, a partition 806 having a size of N×2N, and a partition 808 having a size of N×N. Here, the information 800 about a partition type of a current coding unit is set to indicate one of the partition 804 having a size of 2N×N, the partition 806 having a size of N×2N, and the partition 808 having a size of N×N.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

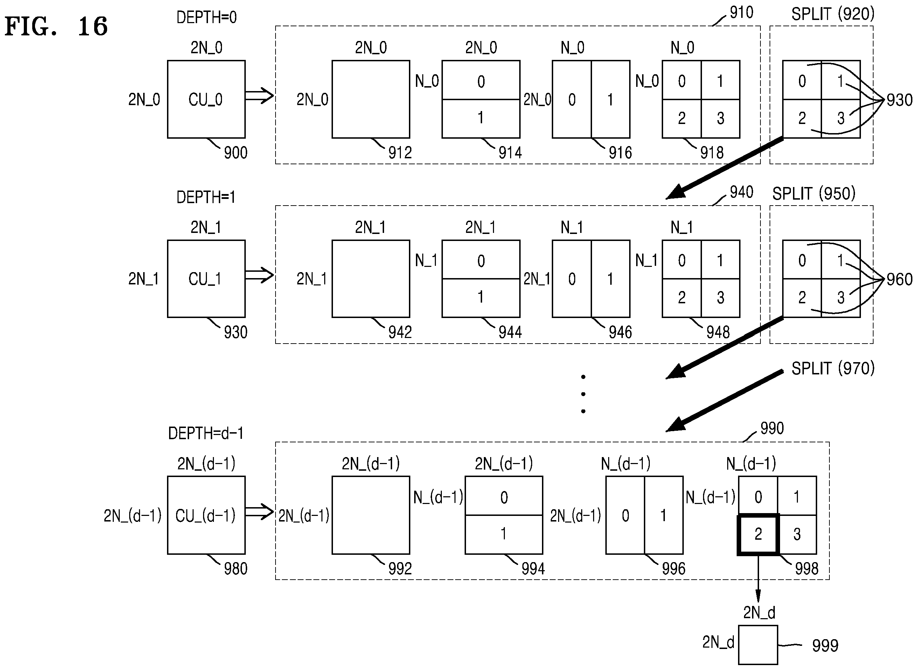

FIG. 16 is a diagram of deeper coding units according to depths, according to an embodiment of the present disclosure.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0×2N_0 may include partitions of a partition type 912 having a size of 2N_0×2N_0, a partition type 914 having a size of 2N_0×N_0, a partition type 916 having a size of N_0×2N_0, and a partition type 918 having a size of N_0×N_0. FIG. 9 only illustrates the partition types 912, 914, 916, and 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0×2N_0, two partitions having a size of 2N_0×N_0, two partitions having a size of N_0×2N_0, and four partitions having a size of N_0×N_0, according to each partition type. The prediction encoding in an intra mode and an inter mode may be performed on the partitions having the sizes of 2N_0×2N_0, N_0×2N_0, 2N_0×N_0, and N_0×N_0. The prediction encoding in a skip mode is performed only on the partition having the size of 2N_0×2N_0.

If an encoding error is smallest in one of the partition types 912, 914, and 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0×N_0 to search for a minimum encoding error.

A prediction unit 940 for prediction encoding the coding unit 930 having a depth of 1 and a size of 2N_1×2N_1 (=N_0×N_0) may include partitions of a partition type 942 having a size of 2N_1×2N_1, a partition type 944 having a size of 2N_1×N_1, a partition type 946 having a size of N_1×2N_1, and a partition type 948 having a size of N_1×N_1.

If an encoding error is the smallest in the partition type 948, a depth is changed from 1 to 2 to split the partition type 948 in operation 950, and encoding is repeatedly performed on coding units 960, which have a depth of 2 and a size of N_2×N_2 to search for a minimum encoding error.

When a maximum depth is d, deeper coding units according to depths may be set until when a depth corresponds to d-1, and split information may be set until when a depth corresponds to d-2. That is, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)×2N_(d-1) may include partitions of a partition type 992 having a size of 2N_(d-1)×2N_(d-1), a partition type 994 having a size of 2N_(d-1)×N_(d-1), a partition type 996 having a size of N_(d-1)×2N_(d-1), and a partition type 998 having a size of N_(d-1)×N_(d-1).

Prediction encoding may be repeatedly performed on one partition having a size of 2N_(d-1)×2N_(d-1), two partitions having a size of 2N_(d-1)×N_(d-1), two partitions having a size of N_(d-1)×2N_(d-1), four partitions having a size of N_(d-1)×N_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current LCU 900 is determined to be d-1 and a partition type of the current LCU 900 may be determined to be N_(d-1)×N_(d-1). Also, since the maximum depth is d and an SCU 980 having a lowermost depth of d-1 is no longer split to a lower depth, split information for the SCU 980 is not set.

A data unit 999 may be a 'minimum unit' for the current LCU. A minimum unit according to an embodiment of the present disclosure may be a square data unit obtained by splitting an SCU 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth. As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 according to an embodiment may determine a depth, in which split information is 0, as a coded depth by using split information according to depths, and use information about an encoding mode of the corresponding depth for decoding.

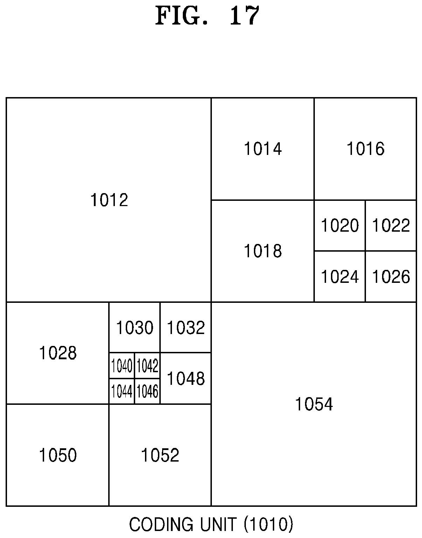

FIGS. 17, 18, and 19 are diagrams for describing a relationship between coding units, prediction units, and transformation units, according to an embodiment of the present disclosure.

The coding units 1010 are coding units having a tree structure, corresponding to coded depths determined by the video encoding apparatus 100, in an LCU. The prediction units 1060 are partitions of prediction units of each of the coding units 1010, and the transformation units 1070 are transformation units of each of the coding units 1010.

When a depth of an LCU is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2N×N, partition types in the coding units 1016, 1048, and 1052 have a size of N×2N, and a partition type of the coding unit 1032 has a size of N×N. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. That is, the video encoding and decoding apparatuses 100 and 200 may perform intra prediction, motion estimation, motion compensation, transformation, and inverse transformation on an individual data unit in the same coding unit.

Accordingly, encoding is recursively performed on each of coding units having a hierarchical structure in each region of an LCU to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

[Table 1]

| Split Information 0 (Encoding on Coding Unit having Size of 2N×2N and Current Depth of d) | | | | | Split Information 1 |
|---|---|---|---|---|---|
| Prediction Mode | Partition Type | | Size of Transformation Unit | | |
| Intra | Symmetrical Partition Type | Asymmetrical Partition Type | Split Information 0 of Transformation Unit | Split Information 1 of Transformation Unit | Repeatedly Encode Coding Units having Lower Depth of d+1 |
| Inter | 2N×2N 2N×N N×2N N×N | 2N×nU 2N×nD nL×2N nR×2N | 2N×2N | N×N (Symmetrical Type) N/2×N/2 (Asymmetrical Type) | |
| Skip (Only 2N×2N) | | | | | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2N×2N.

The information about the partition type may indicate symmetrical partition types having sizes of 2N×2N, 2N×N, N×2N, and N×N, which are obtained by symmetrically splitting a height or a width of a prediction unit, and asymmetrical partition types having sizes of 2N×nU, 2N×nD, nL×2N, and nR×2N, which are obtained by asymmetrically splitting the height or width of the prediction unit. The asymmetrical partition types having the sizes of 2N×nU and 2N×nD may be respectively obtained by splitting the height of the prediction unit in 1:3 and 3:1, and the asymmetrical partition types having the sizes of nL×2N and nR×2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2N×2N, which is the size of the current coding unit. If split information of the transformation unit is 1, the transformation units may be obtained by splitting the current coding unit. Also, if a partition type of the current coding unit having the size of 2N×2N is a symmetrical partition type, a size of a transformation unit may be N×N, and if the partition type of the current coding unit is an asymmetrical partition type, the size of the transformation unit may be N/2×N/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in an LCU may be determined.

Accordingly, if a current coding unit is predicted based on encoding information of adjacent data units, encoding information of data units in deeper coding units adjacent to the current coding unit may be directly referred to and used.

As another example, if a current coding unit is predicted based on encoding information of adjacent data units, data units adjacent to the current coding unit are searched using encoded information of the data units, and the searched adjacent coding units may be referred for predicting the current coding unit.

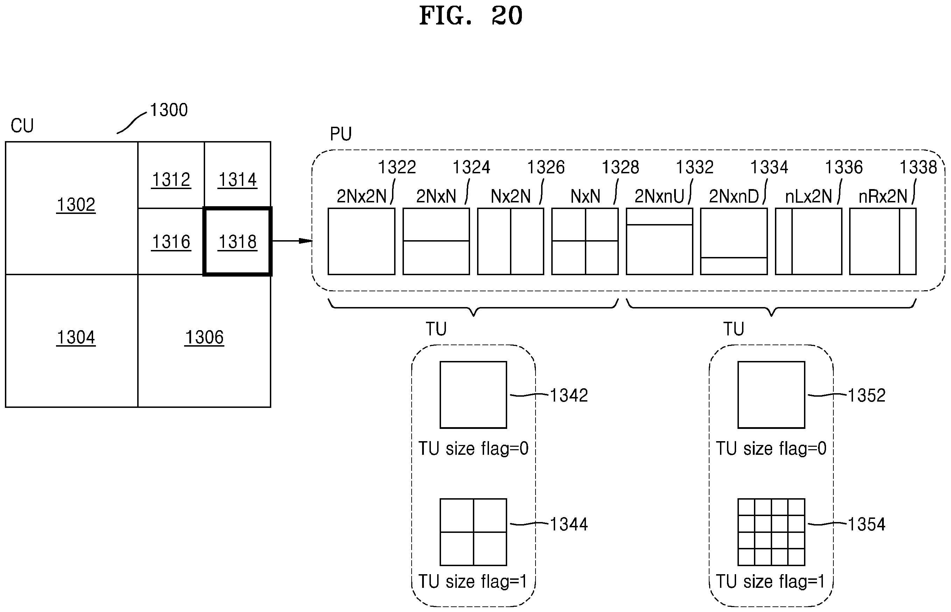

FIG. 20 is a diagram for describing a relationship between a coding unit, a prediction unit, and a transformation unit, according to encoding mode information of Table 1.

AN LCU 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2N×2N may be set to be one of a partition type 1322 having a size of 2N×2N, a partition type 1324 having a size of 2N×N, a partition type 1326 having a size of N×2N, a partition type 1328 having a size of N×N, a partition type 1332 having a size of 2N×nU, a partition type 1334 having a size of 2N×nD, a partition type 1336 having a size of nL×2N, and a partition type 1338 having a size of nR×2N.

Split information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2N×2N is set if a TU size flag of a transformation unit is 0, and a transformation unit 1344 having a size of N×N is set if a TU size flag is 1.

When the partition type is set to be asymmetrical, i.e., the partition type 1332, 1334, 1336, or 1338, a transformation unit 1352 having a size of 2N×2N is set if a TU size flag is 0, and a transformation unit 1354 having a size of N/2×N/2 is set if a TU size flag is 1.

Referring to FIG. 20, the TU size flag is a flag having a value or 0 or 1, but the TU size flag is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment according to the present disclosure, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64×64 and a maximum transformation unit size is 32×32, (a-1) then the size of a transformation unit may be 32×32 when a TU size flag is 0, (a-2) may be 16×16 when the TU size flag is 1, and (a-3) may be 8×8 when the TU size flag is 2.

As another example, (b) if the size of the current coding unit is 32×32 and a minimum transformation unit size is 32×32, (b-1) then the size of the transformation unit may be 32×32 when the TU size flag is 0. Here, the TU size flag cannot be set to a value other than 0, since the size of the transformation unit cannot be less than 32×32.

As another example, (c) if the size of the current coding unit is 64×64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max (\text{MinTransformSize}, \text{RootTuSize}/(2^{\wedge}\text{MaxTransformSizeIndex})) \ ... \ (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment according to the present disclosure, the maximum transformation unit size Root-TuSize may vary according to the type of a prediction mode.

For example, if a current prediction mode is an inter mode, then 'RootTuSize' may be determined by using Equation (6) below. In Equation (6), 'MaxTransformSize' denotes a maximum transformation unit size, and 'PUSize' denotes a current prediction unit size.

$$RootTuSize = min(MaxTransformSize, PUSize) ......... (6)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (7) below. In Equation (7), 'PartitionSize' denotes the size of the current partition unit.

$$RootTuSize = min(MaxTransformSize, PartitionSize) ..........(7)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure as described with reference to FIGS. 8 through 20, image data of the spatial domain is encoded for each coding unit of a tree structure. According to the video decoding method based on coding units having a tree structure, decoding is performed for each LCU to reconstruct image data of the spatial domain. Thus, a picture and a video that is a picture sequence may be reconstructed. The reconstructed video may be reproduced by a reproducing apparatus, stored in a storage medium, or transmitted through a network.

Also, offset parameters may be signaled with respect to each picture, each slice, each LCU, each of coding units having a tree structure, each prediction unit of the coding units, or each transformation unit of the coding units. For example, sample values of reconstructed pixels of each LCU may be adjusted by using offset values reconstructed based on received offset parameters, and thus an LCU having a minimized error between an original block and the LCU may be reconstructed.

The embodiments of the present disclosure may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

At least a portion of the element named "-er/or" used herein may be embedded as hardware. In addition, the hardware may include a processor. The processor may be a general purpose single- or multi-chip microprocessor (e.g., an ARM), a special purpose microprocessor (e.g., a digital signal processor (DSP)), a microcontroller, a programmable gate array, etc. The processor may be referred to as a central processing unit (CPU). In at least a portion of the element named with a suffix "-er/or", a combination of processors (e.g., an ARM and DSP) may be used.

The hardware may also include a memory. The memory may be any electronic component capable of storing electronic information. The memory may be embodied as random access memory (RAM), read-only memory (ROM), magnetic disk storage media, optical storage media, flash memory devices in RAM, on-board memory included with the processor, EPROM memory, EEPROM memory, registers, and so forth, including combinations thereof.

Data and programs may be stored in the memory. The programs may be executable by the processor to implement the methods disclosed herein. Executing the programs may involve the use of the data stored in the memory. When the processor executes instructions, various portions of the instructions may be loaded onto the processor, and various pieces of data may be loaded onto the processor.

The preferred embodiments of the present disclosure have been described. It can be understood that various modifications and changes can be made without departing from the scope of the present disclosure by those skilled in the art to which the present disclosure pertains. Accordingly, the disclosed embodiments are to be considered as illustrative and not restrictive. The scope of the present disclosure is defined not by the detailed description of the present disclosure but by the appended claims, and all differences within the scope will be construed as being included in the present disclosure.

**Claims**

1.  A video decoding method comprising:

    parsing, from a bitstream, a scale parameter for scaling an offset of a current block;
    scaling an offset absolute value of the current block by using the scale parameter;
    determining an offset of the current block by using the scaled offset absolute value; and
    compensating for a sample value of a reconstructed pixel of the current block by using the offset of the current block.

2.  The video decoding method of claim 1, wherein the scale parameter is based on at least one of a bit depth and a quantization parameter.

3.  The video decoding method of claim 1, wherein the parsing from the bitstream comprises parsing the scale parameter from a picture parameter set (PPS) of the bitstream.

4.  The video decoding method of claim 1, wherein the parsing from the bitstream comprises parsing the scale parameter from a sequence parameter set (SPS) of the bitstream.

5.  The video decoding method of claim 1, wherein the parsing from the bitstream comprises parsing the scale parameter from a slice segment header of the bitstream.

6.  The video decoding method of claim 5, further comprising:

    parsing a flag, which indicates that the scale parameter is present in the slice segment header, from a sequence parameter set of the bitstream; and
    parsing the scale parameter from the slice segment header when the flag is 1.

7.  The video decoding method of claim 1, wherein the scale parameter comprises at least one of a parameter related to a luma component and a parameter related to a chroma component.

8.  The video decoding method of claim 1, wherein the scale parameter comprises at least one of a parameter related to an edge offset (EO) and a parameter related to a band offset (BO).

9.  The video decoding method of claim 1, wherein the scale parameter has a range of 0 to Max(bitDepth-10, 0) (where bitDepth denotes a bit depth).

10. A video decoding apparatus comprising:

    an extractor configured to parse, from a bitstream, a scale parameter for scaling an offset of a current block;
    an offset determiner configured to scale an offset absolute value of the current block by using the scale parameter, and determine an offset of the current block by using the scaled offset absolute value; and
    a pixel compensator configured to compensate for a sample value of a reconstructed pixel of the current block by using the offset of the current block.

11. A non-transitory computer-readable recording medium having recorded thereon a program for performing the video decoding method of any one of claims 1 to 9.

12. A video encoding method comprising:

    encoding an image based on blocks having a tree structure;
    determining a scale parameter for scaling an offset of a current block;
    encoding the scale parameter; and
    transmitting a bitstream including the encoded scale parameter.

13. The video encoding method of claim 12, wherein the determining of the scale parameter comprises determining the scale parameter based on at least one a bit depth and a quantization parameter.

14. The video encoding method of claim 12, wherein the determining of the scale parameter comprises determining the scale parameter in a range of 0 to Max(bitDepth-10, 0) (where bitDepth denotes a bit depth).

15. A video encoding apparatus comprising:

an encoder configured to encode an image based on blocks having a tree structure;
a parameter determiner configured to determine a scale parameter for scaling an offset of a current block; and
a transmitter configured to encode the scale parameter and transmit a bitstream including the encoded scale parameter.

FIG. 1

# FIG. 2

START

ENCODE IMAGE BASED ON BLOCKS
HAVING TREE STRUCTURE — 21

DETERMINE SCALE PARAMETER — 22

TRANSMIT BITSTREAM INCLUDING
SCALE PARAMETER — 23

END

# FIG. 3

30

32

34

36

| EXTRACTOR | → | OFFSET DETERMINER | → | PIXEL COMPENSATOR | → |

# FIG. 4

```
        ┌─────────┐
        │  START  │
        └─────────┘
             │
             ▼
┌───────────────────────────────┐
│   PARSE SCALE PARAMETER FROM   │───── 41
│          BITSTREAM             │
└───────────────────────────────┘
             │
             ▼
┌───────────────────────────────┐
│ DETERMINE OFFSET OF CURRENT BLOCK │──── 42
└───────────────────────────────┘
             │
             ▼
┌───────────────────────────────┐
│   COMPENSATE FOR SAMPLE VALUES OF   │──── 43
│ RECONSTRUCTED PIXELS OF CURRENT BLOCK │
└───────────────────────────────┘
             │
             ▼
        ┌─────────┐
        │   END   │
        └─────────┘
```

EP 3 107 298 A1

# FIG. 5

# FIG. 6

| 61 | 62 | 63 | 64 |
|---|---|---|---|
| EO CLASS = 0 | EO CLASS = 1 | EO CLASS = 2 | EO CLASS = 3 |
| HORIZONTAL | VERTICAL | 135° DIAGONAL LINE | 45° DIAGONAL LINE |

# FIG. 7A

| CATEGORY | CONDITION |
|----------|-----------|
| 1 | Xc < Xa && Xc < Xb |
| 2 | (Xc < Xa && Xc == Xb)\|\|(Xc == Xa && Xc < Xb) |
| 3 | ( Xc > Xa && Xc == Xb)\|\|(Xc == Xa && Xc > Xb) |
| 4 | Xc > Xa && Xc > Xb |
| 0 | WHEN CONDITIONS 1, 2, 3, AND 4 ARE NOT SATISFIED |

# FIG. 7B

FIG. 8

# FIG. 9

200

| 210 | 220 | 230 |
|-----|-----|-----|
| RECEIVER | IMAGE DATA AND ENCODING INFORMATION EXTRACTOR | IMAGE DATA DECODER |

# FIG. 10

64
64×64

64
64×32

32
32×64

32
32×32

32
32×32

32
32×16

16
16×32

16
16×16

16
16×16

16
16×8

8
8×16

8
8×8

8
8×8

8
8×4

4
4×8

4
4×4

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335 325

30

# FIG. 11

EP 3 107 298 A1

# FIG. 12

EP 3 107 298 A1

# FIG. 13

600

LARGEST CODING UNIT   MAXIMUM HEIGHT AND MAXIMUM WIDTH OF CODING UNITS=64   MAXIMUM DEPTH=3

64 ⟋610
64
64
64×64

64 ⟋612
32
64×32

32 ⟋614
64
32×64

32 ⟋616
32
32×32

PREDICTION UNIT/ PARTITION

32 ⟋620
32
32×32

32 ⟋622
16
32×16

16 ⟋624
32
16×32

16 ⟋626
16
16×16

16 ⟋630
16
16×16

16 ⟋632
8
16×8

8 ⟋634
16
8×16

8 ⟋636
8
8×8

8 ⟋640
8
8×8

8 ⟋642
4
8×4

4 ⟋644
8
4×8

4 ⟋646
4
4×4

SMALLEST CODING UNIT

DEEPER CODING UNITS ACCORDING TO DEPTHS

FIG. 14

CODING UNIT (710)

64

64×64

TRANSFORMATION UNIT (720)

32

32

32×32

# FIG. 15

PARTITION TYPE (800)

802    2N    804    N    806    N    808

N    0
     1

2N    0    1

N    0    1
      2    3

PREDICTION MODE (810)

812    814    816

INTRA MODE    INTER MODE    SKIP MODE

SIZE OF TRANSFORMATION UNIT (820)

824    826    828

INTER

**FIG. 16**

# FIG. 17

CODING UNIT (1010)

FIG. 18

PREDICTION UNIT (1060)

## FIG. 19

TRANSFORMATION UNIT (1070)

# FIG. 20

CU

／1300

| 1302 | 1312 | 1314 |
|      | 1316 | 1318 |
| 1304 | 1306 |      |

PU

| 1322 | 1324 | 1326 | 1328 | 1332 | 1334 | 1336 | 1338 |
| 2Nx2N | 2NxN | Nx2N | NxN | 2NxnU | 2NxnD | nLx2N | nRx2N |

TU

1342
TU size flag=0

1344
TU size flag=1

TU

1352
TU size flag=0

1354
TU size flag=1

EP 3 107 298 A1

<div align="center">

**INTERNATIONAL SEARCH REPORT**

</div>

| International application No. |
| --- |
| **PCT/KR2015/002528** |

| A. | CLASSIFICATION OF SUBJECT MATTER |
| --- | --- |

*H04N 19/70(2014.01)i, H04N 19/146(2014.01)i, H04N 19/117(2014.01)i*

According to International Patent Classification (IPC) or to both national classification and IPC

| B. | FIELDS SEARCHED |
| --- | --- |

Minimum documentation searched (classification system followed by classification symbols)
H04N 19/70; H04N 7/12; H04N 19/146; H04N 19/117

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: offset, scale parameter, shift, decoding

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WOO-SHIK KIM et al. "AhG5: Offset Scaling in SAO for High Bit-depth Video Coding", Joint Collaborative Team on Video Coding (JCT-VC) of ITU-T SG 16 WP 3 and ISO/IEC JTC 1/SC 29/WG 11, 13th Meeting: Incheon, KR, JCTVC-M0335, 23 April 2013, pages 1-10. See pages 1-2. | 1-2,7,10-11 |
| Y | | 3-6,8-9,12-15 |
| Y | JIANLE CHEN et al. "MV-HEVC/SHVC HLS: On signaling of scaled reference offset", Joint Collaborative Team on 3D Video Coding Extensions of ITU-T SG 16 WP 3 and ISO/IEC JTC 1/SC 29/WG 11, 5th Meeting: Vienna, AT, JCT3V-E0083, 16 July 2013, pages 1-5. See pages 2-4. | 3-6 |
| Y | WOO-SHIK KIM et al. "AhG 5 and 18: Sample Adaptive Offset on High Bit-depth", Joint Collaborative Team on Video Coding (JCT-VC) of ITU-T SG 16 WP 3 and ISO/IEC JTC 1/SC 29/WG 11, 15th Meeting: Geneva, CH, JCTVC-O0091, 22 October 2013, pages 1-4. See pages 2-3. | 8-9,14 |
| Y | US 2011-0206115 A1 (OKUMURA, Akihiro et al.) 25 August 2011 See paragraphs [0067]-[0072] and claim 1. | 12-15 |

| ☒ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 JUNE 2015 (04.06.2015) | **10 JUNE 2015 (10.06.2015)** |
| Name and mailing address of the ISA/**KR** Korean Intellectual Property Office Government Complex-Daejeon, 189 Seonsa-ro, Daejeon 302-701, Republic of Korea Facsimile No. 82-42-472-7140 | Authorized officer Telephone No. |

Form PCT/ISA/210 (second sheet) (July 2009)

...

**EP 3 107 298 A1**

| INTERNATIONAL SEARCH REPORT | International application No. |
|---|---|
| | **PCT/KR2015/002528** |

C (Continuation). DOCUMENTS CONSIDERED TO BE RELEVANT

| Category* | Citation of document, with indication, where appropriate, of the relevant passages | Relevant to claim No. |
|---|---|---|
| A | SHIH-TA HASIANG et al. "AHG8: Sample adaptive offset with multiple parameters", Joint Collaborative Team on Video Coding (JCT-VC) of ITU-T SG 16 WP 3 and ISO/IEC JTC 1/SC 29/WG 11, 16th Meeting: San Jose, US, JCTVC-P0109, 09 January 2014, pages 1-2. See pages 1-2. | 1-15 |

Form PCT/ISA/210 (continuation of second sheet) (July 2009)

51

INTERNATIONAL SEARCH REPORT
Information on patent family members

International application No.

**PCT/KR2015/002528**

| Patent document cited in search report | Publication date | Patent family member | Publication date |
|---|---|---|---|
| US 2011-0206115 A1 | 25/08/2011 | CN 102164280 A | 24/08/2011 |
| | | JP 2011-172137 A | 01/09/2011 |
| | | JP 5618128 B2 | 05/11/2014 |

Form PCT/ISA/210 (patent family annex) (July 2009)